# EUROPÄISCHE PATENTANMELDUNG

(11) **EP 0 663 554 A2**
(43) Veröffentlichungstag der Anmeldung: **19.07.1995**
(21) Anmeldenummer: 94119869.9
(22) Anmeldetag: 13.12.1994
(51) Int. Cl.: F16L 7/00

(54) **Gleitkufenring und Verfahren zu seiner Herstellung**

(30) Priorität: 21.12.1993 DE 4343762
(71) Anmelder: Wissmann, Friedbert, 72764 Reutlingen (DE); SAAR-GUMMIWERK GmbH, D-66687 Wadern-Büschfeld (DE)
(72) Erfinder: Wissmann, Friedbert, D-56130 Bad Ems (DE); Kientz, Paul, D-66687 Wadern (DE); Skerra, Bernd, D-72116 Mössingen (DE)
(74) Vertreter: Steimle, Josef, Dipl.-Ing.

(57) **Zusammenfassung**

Ein bandagenartiger, endloser, gummielastischer Grundkörper (1), der beispielsweise aus einem Elastomer nach DIN 7724 besteht, wird einseitig mit Rippen (3) versehen, zur Bevorratung (7) aufgewickelt und von diesem werden Abschnitte (6) abgeschnitten, deren Länge kürzer ist als der Außenumfang des mit Gleitkufenringen zu bestückenden Medienrohres (9). Auf die Rippen (3) werden Kunststoffgleitkufenschuhe (4) erforderlicher Größe aufgesetzt und mit diesen verbunden. Die Enden der Abschnitte (6) werden mit Verschlußstücken (11) versehen und bilden ein offenes Gleitkufenband, das auf der Baustelle um das Medienrohr (9) herumgelegt und auf diesem unter Zugspannung durch einen die Verschlußstücke (11) durchdringenden Stab (17) zu einem einteiligen, einen Verschluß aufweisenden Gleitkufenring geschlossen und festgesetzt wird.

## Beschreibung

Die Erfindung betrifft einen Gleitkufenring für Rohr-in-Rohr-Systeme, Rohrdurchführungen od. dgl. sowie das Verfahren zu seiner Herstellung. Der Gleitkufenring ist auf seinem Rücken mit parallel und im Abstand voneinander axial verlaufenden Gleitkufen versehen, deren Material einen möglichst geringen Reibungskoeffizienten aufweist, beispielsweise ein Polyethylen, Poyamid od. dgl. ist, wobei der Gleitkufenring mit dem Medienrohr festsetzbar ist und dieses im Schutzrohr, der Durchführung od. dgl. führt bzw. zentriert.

Gleitkufenringe der vorbeschrieben Art bestehen nach der DE-PS 26 47 235 aus drei oder mehreren, aus Kunststoff gefertigten und miteinander verbindbaren, mit vorspringenden Gleitkufen versehenen Ringsegmenten, die an beiden Enden Flansche aufweisen, die niedriger als die Gleitkufen und mit Öffnungen zum Hindurchführen von Verbindungsorganen versehen sind. Diese relativ starren Ringsegmente bewirken, daß ein größeres Sortiment unterschiedlich gekrümmter und / oder langer Ringsegmente auf Vorrat gehalten werden muß, um Rohre unterschiedlicher Durchmesser bestücken zu können. Zusätzlich werden aus verschiedenen Gründen Gleitkufenringe mit hohen und niedrigen Gleitkufen benötigt, so daß wegen der unterschiedlichen Gleitkufenhöhe weitere unterschiedliche Ringsegmente bereitgestellt werden müssen. Der aus den starren Ringsegmenten zusammenzusetzende Gleitkufenring liegt mit seiner Innenseite häufig nicht exakt auf der Außenseite des Medienrohres auf, wodurch insbesondere dünnwandige Rohre und Rohre aus weicheren Materialien, z. B. Kunststoffrohre, im Bereich der Gleitkufenringe deformiert werden können.

Diesem Nachteil soll nach der DE 91 14 077 U1 dadurch begegnet werden, daß die Gleitkufen auf einem elastisch biegbaren Ringsegmentkörper ausgebildet und durch aufsteckbare Verlängerungskufen in ihrer radialen Länge vergrößerbar sind. Dabei weisen die Ringsegmentkörper entlang ihrer Längsränder Auflageflächen für Spannbänder auf und die Flansche der Ringsegmentkörper sind hierzu an ihren Enden jeweils mit mindestens einer hinterschnittenen Aufnahmenut für mindestens ein Spannband versehen. Diese relativ dünnwandigen Ringsegmentkörper aus Kunststoff weisen zwar gegenüber den zuerst beschriebenen Segmenten eine geringere Steifigkeit auf, jedoch kann durch ihre begrenzte Biegbarkeit nicht sichergestellt werden, daß der aus den Ringsegmentkörpern gebildete Gleitkufenring mit seiner Innenseite das Medienrohr vollflächig umschließt, wodurch auch hier Deformierungen des Medienrohres im Bereich des Gleitkufenringes nicht ausgeschlossen werden können.

Nach der DE-GM 76 35 629 ist ein weiterer, aus einzelnen Segmenten zusammensetzbarer Gleitkufenring bekannt, bei dem die Gleitkufen aus einem Material gefertigt sind, daß sich durch seine mechanischen Eigenschaften von dem die anderen Teile der Ringkörpersegmente bildenden Material unterscheidet. Hierzu wird der Körper der Ringsegmente aus einem relativ zähen und biegbaren Kunststoffmaterial gefertigt, das aber keine günstigen Abriebeigenschaften aufweist, während die Gleitkufen aus einem anderen Kunststoff mit günstigeren mechanischen Eigenschaften gefertigt werden, wobei die ganzen Ringsegmente mit den unterschiedlichen Kunststoffmaterialien in einem einzigen Guß- oder Spritzgußvorgang hergestellt werden. Auch durch diese, sich in der Praxis bewährten Gleitkufenringe kann bekanntlich nicht sichergestellt werden, daß die Innenseite der Gleitkufenringe stets exakt auf dem Medienrohr aufliegt und eine Deformation dünnwandiger Rohre oder von Rohren aus weicherem Material verhindert wird. Darüber hinaus sind auch bei diesem, aus Einzelsegmenten zusammenzusetzenden Gleitkufenring ebenso wie bei den zuvor beschriebenen Gleitkufenringen sogenannte Hafteinlagen, insbesondere bei Rohren mit sehr glatter Oberfläche, zu verwenden.

Durch die DE 26 47 235 C2 ist ein Distanzhalter für durch Schutzrohre hindurchgeführte Rohre bekannt, bestehend aus einem Ringkörper, der aus mehreren, aus Kunststoff gefertigten und miteinander fest verbindbaren, mit Gleitkufen bildenden Vorsprüngen versehenen Ringsegmenten zusammengesetzt ist, die an beiden Enden Flansche mit Verbindungsöffnungen aufweisen, wobei die Flansche eine kleinere Höhe als die Gleitkufen haben und an ihren jeweils mindestens eine gezahnte Keilfläche oder Anlagefläche für nichtmetallische gezahnte Spannkeilorgane, welche die Verbindungsorgane zwischen den einzelnen Ringsegmenten bilden, vorgesehen ist und die Ringsegmente Ausnehmungen zur Aufnahme mindestens eines zusätzlichen Anfangsverbindungsorganes als Montagehilfsmittel aufweisen. Auch bei diesem, aus einzelnen Kunststoff-Ringsegmenten zusammensetzbaren Gleitkufenring bilden sich ebenso wie bei den vorherbeschriebenen Gleitkufenringen im Bereich der Ringsegmentverbindungen äußerst starre Bereiche aus, die ein exaktes Aufliegen der Gleitkufenring-Innenseite auf dem Medienrohr verhindern, keine Gewähr dafür bieten, daß dünnwandige Rohre oder Rohre aus weicherem Material nicht deformiert werden, wobei auch bei dieser Ausführungsform häufig Hafteinlagen verwendet werden müssen.

Aus dem DE-Prospekt "FP-Gleitkufen (System raci)", FP Franken Plastik, 90763 Fürth/DE ist ein aus Einzelsegmenten zusammensetzbarer Gleitkufenring bekannt, dessen Einzelsegmente aus einem relativ dünnwandigen Kunststoff bestehen, wodurch die Segmente eine hohe Flexibilität erhalten und sich gut an den Außenumfang des Medienrohres anpassen. Die einzelnen Segmente sind an ihrem einen Ende auf der Oberseite und an ihrem anderen Ende auf ihrer Unterseite mit hinterschnittenen Zähnen versehen, über die die einen Gleitkufenring bildenden Segmente ineinandergesteckt und verbunden werden. Das so gebildete Segmentband wird um das Medienrohr herumgelegt und durch Zusammenstecken seiner beiden Enden zu einem Ring geschlossen. Danach wird jede Segmentverbindung mittels eines Spezial-Spannwerkzeugs verspannt und der Gleitkufenring auf dem Medienrohr nicht mehr lösbar festgesetzt, häufig unter Mitverwendung einer Hafteinlage. Die eigentlichen Gleitkufen sind bei dieser Konstruktion in mehrere, in Rohrlängsrichtung hintereinander angeordnete Gleitnoppen aufgeteilt, wobei die Noppen einer Reihe durch einen dünnen Steg miteinander verbunden sind. Die relativ dünnwandigen Kunststoffsegmente bewirken zwar eine hohe Flexibilität, begrenzen aber auch die möglichen Steghöhen. Darüber hinaus konnte insbesondere bei langen Rohrstrecken ein Abknicken der Gleitnoppen beobachtet werden. Ebenso nachteilig ist, daß für jeden Segmenttyp ein eigenes Spannwerkzeug verwendet werden und die Ringposition nach dem Verspannen der Segmente nicht mehr korrigiert werden kann, es sei dem man zerstört den Gleitkufenring.

Der Erfindung liegt nun die Aufgabe zugrunde, einen Gleitkufenring zu schaffen, der einteilig, gegebenenfalls zwei-, drei- oder mehrteilig auszubilden ist, der ein Höchstmaß an Flexibilität aufweist, montagefreundlich ist, keinerlei Metallteile enthält und bei dem der Aufwand für Herstellung und Unterhaltung der Formen minimiert werden kann. Weiterhin ist es Aufgabe der Erfindung darzulegen, aus welchen Materialien der Gleitkufenring zu fertigen ist; gleichzeitig soll die Erfindung das Verfahren zur Herstellung des Gleitkufenringes aufzeigen und einen Hinweis auf die Vorrichtungen geben, mit deren Hilfe der Gleitkufenring bzw. die Gleitkufenringsegmente unter Verwirklichung des Verfahrens hergestellt werden.

Die Erfindung löst diese Aufgaben bei einem Gleitkufenring der vorbeschriebenen Art dadurch, daß der Gleitkufenring aus einem elastischen, flexiblen, dehn- und rückstellbaren, band- oder bandagenartigen, Grundkörper besteht; daß die Oberseite des Grundkörpers eine Anzahl quer zu seiner Längserstreckung verlaufende Rippen aufweist, die parallel und mit Abstand zueinander angeordnet sind, wobei der Abstand der Rippen voneinander ebenso definiert ist wie deren Querschnittsform, Höhe, Breite und Länge; daß auf die Rippen Gleitkufenschuhe mit bedarfsgemäßer Steghöhe aufsteckbar sind und daß der Grundkörper aus einem Elastomer nach DIN 7724 besteht.

Ein solchermaßen ausgebildeter Gleitkufenring ist erfindungsgemäß einschichtig, zwei- oder mehrschichtig ausgebildet, wobei die Schichten eines zwei- oder mehrschichtig ausgebildeten Grundkörper aus gleichem, gleichartigem, einander ähnlichem oder unterschiedlichem Material bestehen und untereinander unter Anwendung von Wärme und / oder Druck verbunden sind sowie gleiche oder unterschiedliche Längenausdehnungskoeffizienten aufweisen.

Erfindungsgemäß bestehen die Rippen aus dem Material des einschichtigen Grundkörpers bzw. bei mehrschichtigen Grundkörpern aus demjenigen der oberen Schicht und sind an den Grundkörper angeformt oder in diesen eingeformt und bilden mit dem Grundkörper ein einheitliches Ganzes. Die Rippen können ausgesteift sein und sowohl in Längserstreckung des Grundkörpers als auch quer dazu einen trapezförmigen Querschnitt aufweisen, der im oberen Bereich in einer geraden, rechteckigen Teil übergehen kann. Auf diese Rippen sind Gleitkufenschuke mit bedarfsgemäß wählbarer Steghöhe aufsteckbar und mit diesen unter Anwendung von Wärme und / oder Druck oder mechanisch verbindbar.

Ebenso sieht die Erfindung vor, daß die Rippen ersetzt sind durch Tragleisten, die auf die Oberseite des Grundkörpers aufsetzbar und mit diesem durch einen Vulkanisations- und / oder Schweißvorgang unter Anwendung von Wärme und / oder Druck verbindbar sind.

Auf die Rippen bzw. Tragleisten sind Gleitkufenschuhe mit wählbarer Steghöhe aufsteckbar und mit diesen mechanisch oder durch einen Vulkanisations- und / oder Schweißvorgang unter Anwendung von Wärme und / oder Druck unverlierbar verbindbar. Zu diesem Zweck weisen die Gleitkufenschuhe in ihrem unteren Teil einen Hohlraum auf, der in Form und Größe den Rippen bzw. Tragleisten kongruent ist. Die Gleitkufenschuhe können beispielsweise aus einem Polyethylen hoher Dichte bestehen und der Hohlraum der Gleitkufenschuhe kann um ein wählbares Maß kleiner sein als die Raumform der Rippen oder Tragleisten, wobei dieses Maß under dem Gesichtspunkt des Memory-Effekts das für die Herstellung der Gleitkufenschuhe verwendeten Werkstoffs auswählbar ist. Das Polyethylen der Gleitkufenschuhe kann dabei zur Verbesserung der Verschleißfestigkeit chemisch vernetzt sein, ebenso können die Gleitkufenschuhe oberflächenvernetzt sein z.B. strahlenvernetzt, und in ihrem oberen Teil aus Vollmaterial bestehen.

Die Gleitkufenschuhe können nach der Erfindung auch mechanisch mit den Rippen bzw.Tragleisten verbindbar sein dadurch, daß in dem Hohlraum eines jeden Gleitkufenschuhes ein, zwei oder mehrere Spreizanker anordbar sind, die in Öffnungen der Rippen bzw. Tragleisten sich verkrallend einpreßbar sind. Die im Hohlraum des Gleitkufenschuhes angeordneten Spreizanker sind entweder mit dem Gleitkufenschuh fest verbunden und stellen mit diesem ein einheitliches Ganzes dar, oder sie werden separat gefertigt und nachträglich in Öffnungen eingesetzt, die im Hohlraum eines jeden Gleitkufenschuhes angeordnet sind. Hierzu sieht die Erfindung vor, daß die Spreizanker entweder unter Anwendung von Wärme und / oder Druck oder dadurch in den Öffnungen der Gleitkufenschuhe festsetzbar sind, daß die in den Gleitkufenschuhen angeordneten Öffnungen mechanisch und / oder unter Anwendung von Wärme geweitet, die Spreizanker in die geweiteten Öffnungen eingesetzt und hier unter Rückbildung der Aufweitung festgesetzt werden.

Ein solchermaßen ausgestalteter Gleitkufenring ist nach der Erfindung ein einteiliger Grundkörper, der ein definierter Abschnitt eines zu einer Rolle aufgewickelten Grundkörperbandes ist, wobei die gestreckte, ungespannte Länge des Abscnitts um ein vorbestimmbares Maß kürzer ist als der Außenumfang des mit dem Gleitkufenring zu bestückenden Medienrohres. Hierbai ist die gestreckte, ungespannte Länge des definierten Abschnitts unter Berücksichtigung der Ausgangsdicke des Grundkörperbandes und begrenzung seines Längenausdehnungskoeffizienten auf eine vorherbestimmbare Größe derart festlegbar, daß der so gebildete Gleitkufenring auf zwei, drei oder mehrere Medienrohre unterschiedlicher Außendurchmesser unter Zugspannung aufbringbar ist, wobei die die Zugspannung vorzugsweise so groß ist, daß die einmal gewählte Position des Gleitkufenringes auf dem Medienrohr bei dessen Einschieben in das Schutzrohr, die die Rohrdurchführung od.dgl. nicht oder nicht wesentlich Veränderbar ist.

Nach einem anderen Merkmal der Erfindung ist der Gleitkufenring zwei oder mehrteilig ausgebildet und aus zwei oder mehreren Grundkörpersegmenten zusammensetzbar, von denen ein jeder ein definierter anderer Abnschnitt des zu einer Rolle aufgewickelten Grundkörperbandes ist und seine gestreckte, ungespannte Länge um ein vorherbestimmbares Maß kürzer ist als der dem Abschnitt entsprechende Außenumfangsteil des mit dem zwei- oder mehrteiligen Gleitkufenring zu bestückenden Medienrohres. Hierbei ist die gestreckte, ungespannte Länge des Grundkörpersegments unter Berücksichtigung der Ausgangsdicke des Grundkörperbandes und Berenzung seines Längenausdehnungskoeffizienten auf eine vorherbestimmbare Größe derart festlegbar, daß der aus zwei oder mehreren Grundkörpersegmenten zusammengesetzte Gleitkufenring auf zwei, drei oder mehrere Medienrohre unterschiedlicher Außendurchmesser unter Zugspannung aufbringbar unmd die Zugspannung so groß ist, daß die einmal gewählte Position des Gleitkufenringes auf dem Medienrohr bei dessen Einschieben in das Schutzrohr, die Rohrdurchführung od. dgl. nicht oder nicht wesentlich veränderbar ist.

Den beiden Endes des einteiligen Grundkörpers sind ebenso wie den beiden Enden eines jeden Grundkörpersegments Verschlußstücke zuordbar und mit diesen unter Anwendung von Wärme und / oder Druck verbindbar. Die dem Grundkörper bzw. den Grundkörpersegmenten zuordbaren Verschlußstücke können u.a. mit Augen versehen Ösen aufweisende Leisten sein, die so gestaltet sind, daß die Ösen einander benachbarter Leisten verzahnend ineinandergreifen und in montiertem Zustand außerhalb der Auflagefläche des Medienrohres liegend von einem Stab, den Grundkörper zu einem einteiligen Gleitkufenring schließend bzw. die einen zwei- oder mehrteiligen Gleitkufenring bildenden Grundkörpersegmente verbindend, durchdringbar sind, daß in die Ösen gegebenenfalls die Augen bildende, die Ösen aussteifende Hülsen eingebettet sind, die aus einem nichtleitenden, hochfesten Material bestehen, während die Ösen und Leisten entweder aus dem Material des Grundkörpers geformt sind oder aus einem Kunststoff bestehen.

Nach einer anderen Ausführungsform der Erfindung sind die Verschlußstücke mit Öffnungen versehene Verschraubleisten oder von Keilen hintergreifbare Verkeilleisten, die so geformt sind, daß sie in montiertem Zustand außerhalb der Auflagefläche des Medienrhores liegend den einteiligen Grundkörper zu einem Gleitkufenring schließen bzw. die einen zwei- oder mehrteiligen Gleitkufenring bildenden Grundkörpersegmente verbinden. Der Rückseite der Verschlußstücke ist eine Auflage zuordbar, die mit diesen unter Anwendung von Wärme und / oder Druck verbindbar ist, wobei die Verschlußstücke über ihre Auflage unter Anwendung von Wärme und / oder Druck mit den Enden des einteiligen Grundkörpers bzw. denjenigen der Grundkörpersegmente durch einen Vulkanisationsprozeß oder einen Schweißvorgang verbindbar sind.

Nach der Erfindung können die Gleitkufenschuhe aus einem Polyethylen hoher Dichte (PE-HD), einem Polyethylenterephthalat (PETP), einem Polybutylenterephthalat (PBTP) od. dgl., einem Polyester auf der Basis von Ethylenglykol und 2,6-Naphthalincarborsäure, einem Polyarylat auf der Basis von beispielsweise Diphenolen und aromatischen Dicarbonsäuren oder einem Polyester auf der Basis einer 4-Hydroxybenzoesäure als einheitlichem Monomeren bestehen.

Nach einem anderen Merkmal der Erfindung ist vorgesehen, daß die Shore-Härte der Rippen von derjenigen des einschichtigen Grundkörpers bzw. von derjenigen der oberen Schicht des zwei- oder mehrschichtigen Grundkörpers abweicht, wobei die Shore-Härte der Rippen vorzugsweise größer ist.

Der Grundkörper kann auch aus einem Thermoplast bestehen, wie z.B. PVC, EVA od. dgl., der eine ausreichende Gummielastizität und einen hohen Reibungskoeffizienten aufweist. Der Grundkörper kann auch aus einem thermoplastischen Elastomer bestehen, wie z.B. einem TPO, SBS, SEBS od. dgl.. Beispielsweise ist das thermoplastische Elastomer unter Zusatz von Füllstoffen, Säureakzeptoren, Vulkanisationsbeschleunigern, Vulkanisatoren, gegebenenfalls unter Mitverwendung von Aktivatoren, plastifizier- und mischbar, anschließent formbar, vulkanisier- und temperbar.

Weiterhin ist vorgesehen, daß der Grundkörper aus einem Kautschuk besteht und der band- oder bandagenartige, endlose Grundkörper einseitig mit einer Auflage versehbar ist, die derart reaktionsfähig einstellbar ist, daß in ihr durch gesteuerte Anwendung von Wärme und / oder Druck ein Vulkanisationsvorgang und / oder ein Schweißprozeß auslösbar ist, durch den sie sowohl mit dem Grundkörper als auch mit den auf sie aufgesetzten Tragleisten unlösbar zu einer aufrollbaren Einheit verbindbar ist. Hierzu ist der Grundkörper vollflächig partiell oder streifenförmig, gegebenenfalls nach Art eines Fischgrätmusters, eines Rautenmusters od. dgl., mit der Auflage kaschierbar.

Bei einem zwei- oder mehrschichtigen Grundkörper ist die Auflage jeweils zwischen den Schichten anordbar und mit diesen unter Anwendung von Wärme und / oder Druck verbindbar. Ebenso ist die Rückseite der Verschlußstücke derart mit der Auflage kaschierbar, daß unter steuerbarer Anwendung von Wärme und / oder Druck in der Auflage eine Teilreaktion auslösbar ist, die ein anheften der Auflage an der Verschlußstückunterseite bewirkt. Die Verschlußstücke sind nun auf die beiden Enden des eiteiligen Gleitkufenringes bzw. auf die Enden eines jeden Grundkörpersegments eines zwei- oder mehrteiligen Gleitkufenringes aufsetzbar und in der Auflage ist unter steuerbarar Anwendung von Wärme und / oder Druck eine Endreaktion auslösbar, durch die die Verschlußstücke unlösbar mit der Auflage und diese unlösbar mit den Enden des einteiligen Gleitkufenringes bzw. den Enden eines jeden Grundkörpersegments eines zwei- oder mehrteiligen Gleitkufenringes verbindbar sind.

Auch auf die Spreizanker ist erfindungsgemäß die Auflage aufbringbar und in ihr durch gesteuerte Anwendung von Wärme und / oder Druck eine Teilreaktion auslösbar, durch die sie an die Spreizanker anheftbar ist, wobei nach Einbringen der mit der Auflage versehenen Spreizankerteile in die Öffnungen der Gleitkufenschuhe unter erneuter gesteuerter Anwendung von Wärme und / oder Druck in der Auflage die Restreaktion auslösbar ist, durch die die Spreizanker mit der Auflage und diese mit den Wandungen der Öffnungen der Gleitkufenschuhe verbindbar sind.

Nach einem Verfahrensmerkmal ist ein einteiliger, einen einzigen Verschluß aufweisender Gleitkufenring dadurch herstellbar, daß in einen endlosen, elastischen, dehn- und rückstellbaren, band- oder bandagenartigen Grundkörper definierter Breite, der ein-, zwei- oder mehrschichtig ausbildbar ist, quer zu seiner Längserstreckung einseitig Rippen bzw. Tragleisten definierter Größe und Form in definiertem, parallelem Abstand zueinander, gegebenenfalls unter Aussteifung durch Einbindung entsprechend gestalteter Profilstäbe od. dgl., eingeformt, an diesen angeformt oder mit diesem verbunden werden. Der mit Rippen oder Tragleisten versehene Grundkörper wird zu Zwecken der Lagerhaltung zu einer Rolle aufgerollt und von dieser werden bedarfsgemäß Teillängen bzw. Abschnitte abgerollt und abgeschnitten, deren Länge um ein vorherbestimmbares Maß kürzer ist als der Außenumfang des mit einteiligen Gleitkufenringen zu bestückenden Medienrohres. Die Teillängen bzw. Abschnitte werden anschließend dadurch zu einteiligen, offenen Gleitkufenbändern konfektioniert, daß die beiden Enden der Abschnitte mit einander kongruenten Verschlußleisten versehen und mit diesen mittels eines Vulkanisations- oder Schweißvorgangs verbunden werden. Auf die Rippen bzw. Tragleisten der einteiligen Gleitkufenbänder werden nun Kunststoff-Gleitkufenschuhe mit bedarfsgemäßer Steghöhe aufgesteck und mit diesen mittels eines Vulkanisations- oder Schweißvorgangs, gegebenenfalls mechanisch, verbunden. Die so hergestellten einteiligen, offenen Gleitkufenbänder werden an vorbestimmten Stellen um das Medienrohr herumgelegt und dadurch zu einteiligen, einen einzigen Verschluß aufweisenden Gleitkufenringen ausgebildet, daß unter Aufbringen einer Zugspannung die Verschlußleisten jeweils mittels eines Stabes oder mittels zweier Schrauben mit zugehörigen Muttern oder mittels zweier Keile in die einzigen Verschlüsse umgewandelt werden.

Nach einem anderen Verfahrensmerkmal ist ein zwei-, drei- oder mehrteiliger, zwei, drei oder mehrere Verschlüsse aufweisender Gleitkufenring dadurch herstellbar, daß in einen endlosen, elastischen, flexiblen, dehn- und rückstellbaren, band- oder bandagenartigen Grundkörper definierter Breite, der ein-, zwei- oder mehrschichtig ausgebildet ist, quer zu seiner Längserstreckung einseitig Kippen bzw. Tragleisten definierter Abmessungen und Form in definiertem, parallelem Abstand zueinander, gegebenenfalls unter Aussteifung durch Einbindung entsprechend gestalteter Profilstäbe od. dgl., eingeformt, an diesen angeformt oder mit diesem verbunden werden, daß der mit Rippen oder Tragleisten versehene Grundkörper zu Zwecken der Lagerhaltung zu einer rolle aufgerollt und von dieser bedarfsgemäß eine den Ringteilen entsprechende Zahl von Teillängen bzw. Abschnitten abgerollt und abgeschnitten werden, deren gestreckte, ungespannte Länge um ein vorherbestimmbares Maß kürzer ist als der entsprechende Außenteilumfang des mit Gleitkufenringen zu bestückenden Medienrohres, daß die Teillängen bzw. Abschnitte anschließend dadurch zu Gleitkufensegmenten konfektioniert werden, daß die beiden Enden eines jeden Abschnitts mit einander kongruenten Verschlußleisten versehen und mit diesen mittels eines Vulkanisations- oder Schweißvorgangs verbunden werden, daß anschließend auf die Rippen oder Tragleisten Kunststoff-Gleitkufenschuhe mit bedarfsgemäßer Steghöhe aufgesteckt und mit diesen mittels eines Vulkanisations- oder Schweißvorgangs bzw. mechanisch verbunden werden, daß die so konfektionierten Gleitkufensegmente auf der Baustelle dadurch zu offenen Gleitkufensegmentbändern zusammengesetzt werden, daß die Verschlußstücke einander benachbarter Gleitkufensegmente jeweils von einem Stab, zwei Schrauben mit zugehörigen Muttern oder zwei Keilen miteinander verbunden und die so gebildeten Gleitkufensegmentbänder dann an vorherbestimmten Stellen um das Medienrohr herumgelegt und dadurch zu zwei- oder mehrteiligen, zwei oder mehrere Verschlüsse aufweisenden Gleitkufenringen ausgebildet werden, daß unter Aufbringung einer Zugspannung die beiden letzten Verschlußleisten eines jeden Segmentbandes jeweils mittels eines Stabes oder mittels zweier Schrauben mit zugehörigen Muttern oder mittels zweier Keile in einem Verschluß umgewandelt wird.

Ein weiteres Verfahrensmerkmal gibt an, daß man einen endlosen, elastischen, flexiblen, dehn- und rückstellbaren Grundkörper definierter Breite erwärmt und auf seiner Rückseite quer zu seiner Längsertsreckung dadurch parallel zueinander und in definiertem Abstand voneinander verlaufende Rippen ausbildet, daß man entweder Material des Grundkörpers an den für die Rippenausbildung vorgesehenen Stellen des Grundkörpers anhäuft und unter Anwendung von Druck, gegebenenfalls unter erneuter Wärmezufuhr, verdichtet und der gewünschten Rippenform und -größe entsprechend ausformt ode den Grundkörper quer zu seiner Längserstreckung in definierten Abständen in Falten legt, in diese Falten gegebenenfalls Profilstäbe einbringt und die Falten unter erneuter Wärmezufuhr und Druck verschließt und den Profilstab einvulkanisiert, daß man den so mit Rippen versehenen Grundkörper zwecks Lagerhaltung zu einer Rolle aufwickelt, von der man bedarfsgemäß einen definierten Abschnitt für einen einteiligen Gleitkufenring bzw. zwei oder mehrere definierte andere Abschnitte für einen zwei- oder mehrteiligen Gleitkufenring abrollt und abschniedet, daß man die Rippen der Abschnitte erwärmt und auf diese Gleitkufenschuhe mit bedarfsgemäßer Steghöhe aufsteckt und unter Anwendung von Druck und eventuell erneuter Wärmezufuhr, gegebenenfalls unter Mitverwendung eines Haftvermittlers, mit den Rippen verbindet, daß man dann die Enden der Abschnitte dadurch mit jeweils einem Verschlußstück versieht, daß man die Verschlußstücke mit ihrer Unterseite auf die Oberseite der Enden der Abschnitte aufsetzt und miteinander unter Druck und eventuell erneuter Wärmezufuhr, gegebenenfalls unter Mitverwendung eines Haftvermittlers, verbindet, wobei man eventuell zuvor auf der Unterseite der Verschlußstücke eine reaktive Auflage unter Anwendung von Wärme und / oder Druck befestigt, daß man dann entweder den so gebildeten einteiligen Grundkörper um das Medienrohr herumlegt und den Grundkörper über die beiden Verschlußstücke mittels eines Stabes oder zweier Schrauben mit zugehörigen Muttern oder mittels zweier Keile zu einem einteiligen Gleitkufenring schließt und auf dem Medienrohr unter Zugspannung festsetzt, oder die mit Verschlußstücken versehenen Grundkörpersegmente unter Zuhilfenahme jeweils eines Stabes, zweier Schrauben mit zugehörigen Muttern oder oder zweier Keile zu einem offenen Segmentband verbindet, dieses um das Medienrohr herumlegt und unter Herstellung der letzten Verbindung den zwei- oder mehrteiligen Gleitkufenring ausbildet und auf dein Medienrohr unter Zugspannung festsetzt.

Die Erfindung gibt nach einem anderen Verfahrensmerkmal an, daß man einen endlosen, elastischen, flexiblen, dehn- und rückstellbaren Grundkörper definierter Breite von einer Vorratsrolle abrollt und einem Kalander od. dgl. zuführt, daß man den Grundkörper auf seinem Weg zum Kalander auf seiner Oberseite erwärmt und mit einem Haftvermittler, einem Vulkanisationsbeschleuniger, einem Aktivator od. dgl. versieht und auf die so vorbereitete Oberfläche Profilstäbe in definiertem, parallelem Abstand voneinander quer zur Längserstreckung des Grundkörpers festsetzt, daß man zwischenzeitlich einen weiteren endlosen, elastischen, flexiblen, dehn- und rückstellbaren Grundkörper definierter Breite von einer weiteren Vorratsrolle abrollt und diesen auf seinem Weg zum Kalander auf seiner Unterseite ebenfalls erwärmt und gegebenenfalls mit einem Haftvermittler, einem Vulkanisationsbeschleuniger, einem Aktivator od. dgl. versieht, daß man dei so vorbereiteten beiden Grundkörper im Kalander zusammenführt und unter Einschluß der auf dein ersten Grundkörper festgesetzten Profilstäbe unter Anwendung von Druck und eventuell erneuter Wärmezufuhr miteinander verbindet derart, daß man einen mit ausgesteiften Rippen versehenen endlosen, elastischen, flexiblen, dehn- und rückstellbaren, zweischichtigen Grundkörper erhält, den man zur Lagerhaltung zu einer Rolle aufwickelt von der man definierte Abschnitte abrollt und abschneidet und in vorbeschriebener Weise zu einteiligen, zwei- oder mehrteiligen offenen Gleitkufenbändern konfektioniert und in der geschilderten Weise auf dem Medienrohr festsetzt. Dabei ist ein wesentliches Merkmal der Erfindung, daß man sowohl die ausgesteiften als auch die nicht ausgesteiften Rippen so ausformt, daß sie nach Abschluß des Vulkanisationsvorgangs sowohl mit dem einschichtigen als auch mit dein zwei oder mehrschichtigen Grundkörper ein einheitliches Ganzes bilden. Zu diesem Zweck steuert man die Wärmezufuhr und / oder den Druck bei einem einschichtigen Grundkörper im Bereich der auszusteifenden Rippen auf der den Rippen abgewandten Seite des Grundkörpers derart variabel, daß sich partiell ein höherer Plastifizierungsgrad des Grundkörperwerkstoffs einstellt und im Bereich der ursprünglichen Faltenausbildung quasi eine Materialverschmelzung erfolgt derart, daß man auch im Bereich der ursprünglich Fallen ein homogenes, einheitliches Ganzes erreicht und die den Rippen abgewandte Seite des Grundkörpers eine geschlossene Fläche bildet.

Die Rippen bildet man entweder über die gesamte Breite des Grundkörpers aus, oder man begrenzt die Länge der Rippen und / oder der Profilstäbe derart, daß man an den beiden Längsrändern des Grundkörpers definierte Führungsränder erhält, über die man die Grundkörper dem Kalander gesteuert zuführt und von diesem gesteuert fortführt.

Zur Aussteilung der Rippen verwendet man insbesondere Profilstäbe aus einem nichtleitendem Material, deren Querschnittsform der gewünschten Querschnittsform der Rippen kongruent ist, wobei man die Wärmezufuhr und den Druck auf der den Rippen zugewandten Seile des Grundkörpers so steuert, daß im Bereich der Rippenausbildung ein höherer Plastifizierungsgrad des Grundkörperwerkstoffs erzielt wird.

Bei einem mehrschichtigen Grundkörper ordnet man erfindungsgemäß zwischen zwei Schichten eine weitere Schicht an und verbindet diese mit den anderen Schichten unter Anwendung von Wärme und / oder Druck, gegebenenfalls unter Mitverwendung eines Haftvermittlers, eines Vulkanisationsbeschleunigers und / oder eines Aktivators, wobei man der mittleren Schicht einen Längenausdehnungskoeffizienten zuordnet, der die mögliche Längenausdehnung der anderen Schichten auf 10 bis 90 %, vorzugsweise 25 bis 70 %, begrenzt. Unter Verzicht auf das Einvulkanisieren der mittleren Schicht kann diese auch an die untere Schicht anvulkanisiert bzw. angeschweißt werden. Auch ist vorgesehen, daß man die Schichten untereinander gleichzeitig mit der Ausbildung der Rippen miteinander verbindet und den Längenausdehnungskoeffizienten des ein-, zwei- oder mehrschichtigen Grundkörpers definiert in Abhängigkeit von der jeweiligen Shore-Härte.

Nach der Erfindung ersetzt man vorzugsweise bei einem einschichtigen Grundkörper die Rippen durch Tragleisten, die man in parallelem, definiertem Abstand voneinander auf die Oberseite des Grundkörpers aufsetzt und mit diesem verbindet. Hierbei formt man die Tragleisten vorzugsweise aus einem nichtleitenden Material, beispielsweise aus einem Kunststoff, der gegebenenfalls glasfaserverstärkt und / oder UV-stabilisiert ist, einem Elastomer mit insbesondere hoher Shore-Härte od. dgl. aus, setzt sie auf die Oberseite der Grundkörpers auf und verbindet sie mit diesem durch einen Vulkanisations- und / oder Schweißvorgang, insbesondere unter Anwendung von Wärme und / oder Druck, gegebenenfalls unter Mitverwendung eines Haftvermittlers, eines Vulkanisationsbeschleunigers, eines Aktivators od. dgl..

Daneben Sieht die Erfindung vor, daß man die Rippen bzw. Tragleisten sowohl in Längserstreckung des Grundkörpers als auch quer dazu vorzugsweise trapezförmig ausbildet, den trapezförmigen Querschnitt gegebenenfalls in seinem oberen Bereich in einen geraden rechteckigen Teil übergehen läßt, daß man die Gleitkufenschuhe in ihrem unteren Teil mit einem Hohlraum versieht, der in Form und Größe den Rippen bzw. Tragleisten entspricht, und daß man die so gestalteten Gleitkufenschuhe mit ihren Hohlräumen auf die Rippen bzw. Tragleisten aufsteckt und mit diesen verbindet vorzugsweise unter Anwendung von Wärme und / oder Druck, gegebenenfalls unter Mitverwendung eines Haftvermittlers, eines Vulkanisationsbeschleunigers, eines Aktivators od. dgl..

Den Gleitkufenschuh formt man erfindungsgemäß z.B. aus einem gegebenefalls glasfaserverstärkten, notfalls UV-stabilisierten Polyethylen, wobei man den Hohlraum der Gleitkufenschuhe um ein vorherbestimmbares Maß kleiner als die Rippen bzw. Tragleisten ausbildet, daß man dann den Hohlrum der Gleitkufenschuhe derart erwärmt, daß er die Form und Größe der Rippen bzw. Tragleisten annimmt, vorzugsweise um ein definiertes Maß größer wird, und daß man die so behandelten Gleitkufenschuhe mit ihrem Hohlraum auf die Rippen bzw. Tragleisten aufsetzt und sie durch Rückführung ihrer wärmebedingten Ausdehnung der Hohlräume auf ihr ursprüngliches Maß auf den Rippen bzw. Tragleisten festsetzt bzw. aufschrumpft.

Nach einem anderen Verfahren sieht die Erfindung vor, daß man die Gleitkufenschuhe mit den Rippen bzw. Tragleisten mechanisch verbindet. Hierzu versieht man die Rippen bzw. Tragleisten mit einer, zwei oder mehreren Öffnungen, ordnet in dem Hohlraum eines jeden Gleitkufenschuhes eine entsprechende Zahl Spreizanker an und preßt oder schlägt die Spreizanker derart in die Öffnungen ein, daß sie sich in den Wandungen der Öffnungen verkrallen. Die Spreizanker bildet man bei der Herstellung der Gleitkufenschuhe gleichzeitig mit der Ausformung der Hohlräume derart in diesen aus, daß sie mit dem Gleitkufenschuh ein einheitliches Ganzes bilden.

Nach einer weiteren Ausgestaltung ordnet man in den Hohlräumen der Gleitkufenschuhe Öffnungen an, deren Fprm und Querschnittsgröße der Spreizankerform entspricht, wobei man die Spreizanker separat herstellt und sie dadurch unverlierbar in die Öffnungen einsetzt, daß man die Spreizanker entweder unter Anwendung von Wärme und / oder Druck, gegebenenfalls unter vorheriger Aufbringung einer Auflage auf den entsprechenden Teil des Spreizankerschaftes, notfalls unter Mitverwendung eines Haftvermittlers, in den Öffnungen festsetzt oder die Öffnungen mechanisch und / oder unter Anwendung von Wärme aufweitet und die Spreizanker in die Öffnungen unter Rückführung der Aufweitung einschrumpft.

Weiterhin wird vorgeschlagen, daß man die Gleitkufenschuhe z.B. aus einem Polysthylen hoher Dichte fertigt, diesem gegebenenfalls farbgebende Pigmente beimischt und die Gleitkufenschuhe in ihrem oberen Bereich vorzugsweise aus Vollmaterial ausbildet, wobei man den Gleitkufenschuhen in ihrem oberen Bereich eine Querschnittsform gibt, die insbesondere einem Kreisbogenabschnitt entspricht, und daß man das Polyethylen zur Verbesserung seiner Verschleißfestigkeit entweder zuvor in an sich bekannter Weise chemisch vernetzt, oder nachträglich oberflächenvernetzt, insbesondere strahlenvernetzt.

Ebenso ist vorgesehen, daß man eine Rohgummimischung, bestehend aus Kautschuk, Füllstoffen, Beschleunigern und Vulkanisatoren, gegebenenfalls unter Mitverwendung von Aktivatoren, zu einem endlosen, einseitig in Anzahl, Form, Größe und Anordnung definierte Rippen aufweisenden, elastischen, flexiblen, dehn- und rückstellbaren, band- oder bandagenartigen Grundkörper ausformt und vulkanisiert, und daß den den so gebildeten Grundkörper zur Lagerhaltung zu einer Rolle aufwickelt.

Auch ist es nach der Erfindung möglich, daß man den Grundkörper aus einem Thermoplast fertigt, z.B. aus PVC, EVA od. dgl., dem man eine ausreichende Gummielastizität und einen hohen Reibungskoeffizienten zuordnet.

Erfindungsgemäß ist ebenfalls vorgesehen, daß man den Grundkörper aus einem thermoplastischen Elastomer, z.B. einem TPO, SBS, SEBS od. dgl., herstellt und dem Elastomer gegebenefalls Carborane oder andere, die Temperaturbeständigkeit steigernde Produkte sowie gegebenenfalls einen Vulkanisationsbeschleuniger, beimischt. Ebenso ist vorgesehen, daß man den Grundkörper einseitig mit einer Auflage kaschiert, die derart reaktionsfähig gehalten ist, daß man in ihr durch gesteuerte Anwendung von Wärme und / oder Druck einen Vulkanisations- und / oder einen Schweißprozeß auslöst, und daß man die Auflage auf diese Weise sowohl mit dem Grundkörper als auch mit den auf sie aufgesetzten Tragleisten unlösbar zu einer aufrollbaren Einheit verbindet. Hierbei ist vorgesehen, daß man den endlosen Grundkörper definierter Breite vollflächig, partiell oder streifenförmig, gegebenenfalls nach Art eines Fischgrätmusters, eines Rautenmusters od. dgl. mit der Auflage kaschiert.

Auch sieht die Erfindung vor, daß man die Rückseite der Verschlußstücke unter steuerbarer Anwendung von Wärme und / oder Druck mit der Auflage dadurch kaschiert, daß man in der Auflage eine Teilraktion auslöst die ausreicht, um die Auflage dauerhaft an der Rückseite der Verschlußstücke anzuheften, und daß man die so mit der Auflage versehenen Verschlußstücke zur späteren Konfektionierung einteiliger, zwei-, drei- oder mehrteiliger Gleitkufenringe einlagert.

Ein weiteres Verfahrensmerkmal zeigt auf, daß man einen endlosen, elastischen, flexiblen, dehn- und rückstellbaren, band- oder bandagenartigen, gummielastischen Grundkörper definierter Breite von einer Vorratsrolle abrollt und einem Kalander od. dgl. zuführt, daß man von einer anderen Vorratsrolle eine Auflage abrollt und ebenfalls dem Kalander zuführt, daß man die Oberseite des Grundkörpers und 7 oder die Rückseite der Auflage auf dem Weg zum Kalander bzw. im Kalander selbst erwärmt und / oder mit einem Haftvermittler, einem Vulkanisationsbeschleuniger, einem Aktivator od. dgl. versieht, daß man die Auflage zwischen den Walzen des Kalanders vollflächig partiell oder in der Art eines Fischgrätmusters, eines Rautenmusters od. dgl. vorzugsweise unter Anwendung von Druck, notfalls unter erneuter Wärmezufuhr, auf die Oberfläche des Grundkörpers, insbesondere unlösbar, aufkaschiert, daß man auf die aufkaschierte Auflage Tragleisten in parallelem, definiertem Abstand voneinander anordnet und diese in einer Preßvorrichtung od. dgl., gegebenenfalls unter erneuter Wärmezufuhr, unter Anwendung von Druck mit der Auflage verbindet und den so mit Tragleisten versehenen Grundkörper als endloses Grundkörperband zu Zwecken der Lagerhaltung zu einer Rolle aufwickelt.

Ein anderes Verfahrensmerkmal macht deutlich, daß man die Tragleisten als Profilstäbe ausbildet und von einer weiteren Vorratsrolle einen anderen elastischen, flexiblen, dehn- und rückstellbaren band- oder bandagenartigen, gummielastischen zweiten Grundkörper definierter Breite abrollt, auf seiner Rückseite erwärmt und / oder mit einem Haftvermittler, einem Vulkanisationsbeschleuniger, einem Aktivator od. dgl. versieht und gemeinsam mit dem mit der Auflage und den Profilstäben versehenen ersten Grundkörper in eine Preßvorrichtung od. dgl. einführt, und daß man beide Grundkörper unter Einschluß der Profilstäbe über die Auflage miteinander unter Anwendung von Druck und gegebenenfalls erneuter Wärmezufuhr zu einer vorzugsweise unlösbaren Einheit verbindet und den so gebildeten zwei- bzw. dreischichtigen Grundkörper zu Zwecken der Lagerhaltung zu einer Rolle aufwickelt.

Nach einem anderen Verfahren ist vorgesehen, daß man als Vorfertigung für die Herstellung einteiliger Gleitkufenringe von der eingelagerten Rolle eine Vielzahl definierter Abschnitte abrollt und abschneidet, daß man auf die beiden Enden eines jeden Abschnitts ein mit der Auflage versehenes Verschlußstück aufsetzt, und daß man unter steuerbarar Anwendung von Wärme und Druck in der Auflage die Restreaktion auslöst, die Verschlußstücke unlösbar mit der Auflage und diese unlösbar mit dem Abschnitt verbindet und die konfektionierten, einteiligen Grundkörper zu Bevorratung einlagert.

Auch ist vorgesehen, daß man als Vorfertigung für die Herstellung zwei-, drei- oder mehrteiliger Gleitkufenringe von der eingelagerten Rolle eine Vielzahl anderer Abschnitte, von denen jeder ein Grundkörpersegment ist, abrollt und abschneidet, daß man auf jedes Ende eines Grundkörpersegments ein mit der Auflage versehenes Verschlußstück aufsetzt, und daß man unter steuerbarer Anwendung von Wärme und Druck in der Auflage die Restreaktion auslöst, die Verschlußstücke unlösbar mit der Auflage und diese unlösbar mit den Enden des Grundkörpersegments verbindet und die so konfektionierten Grundkörpersegmente zur Bevorratung einlagert.

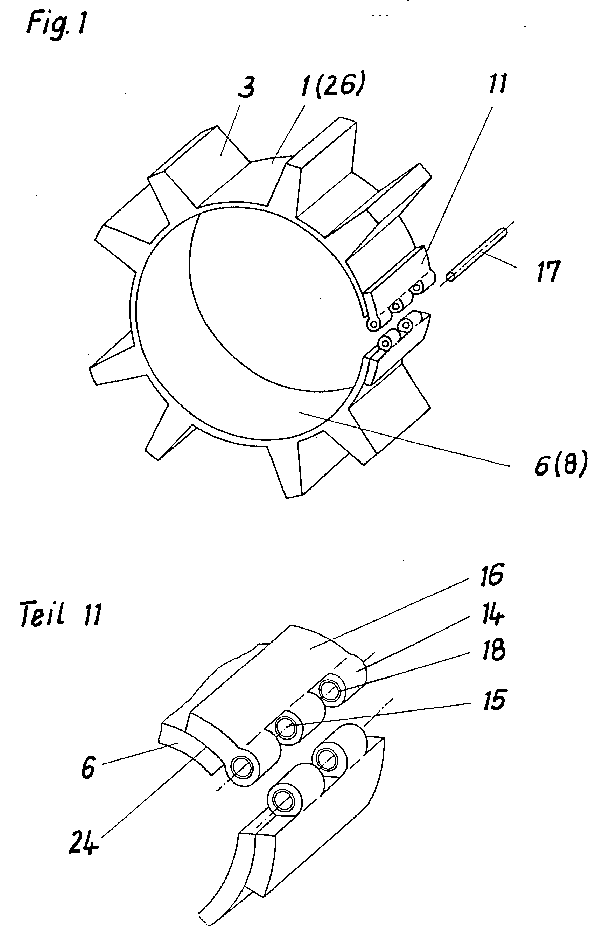

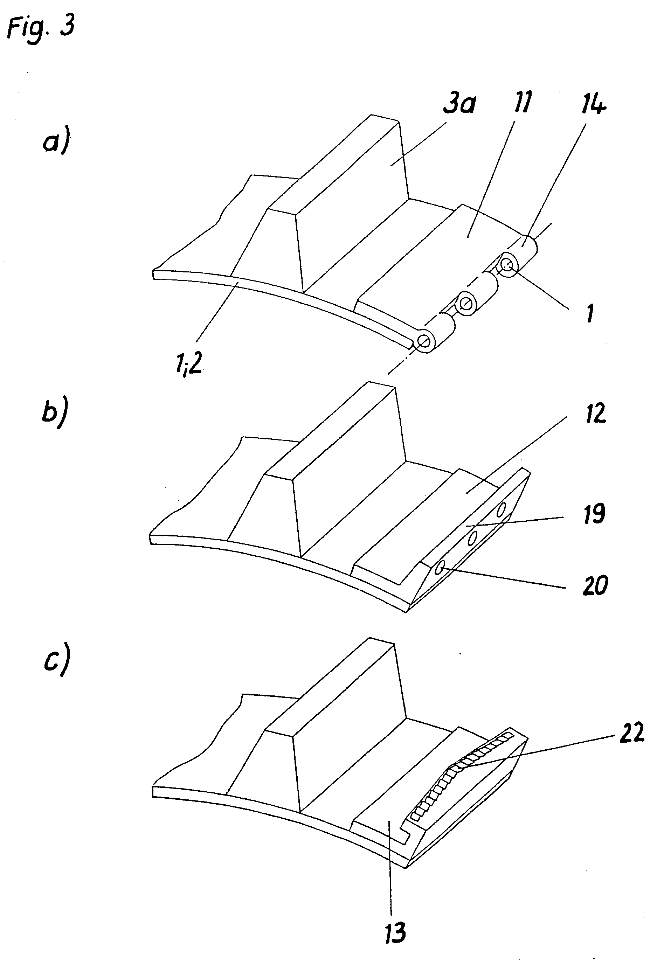

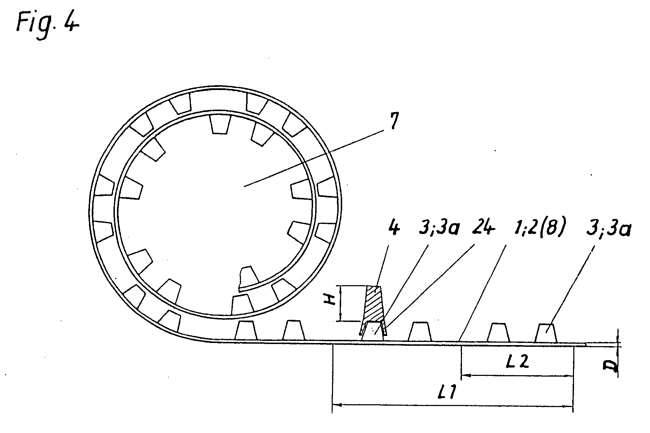

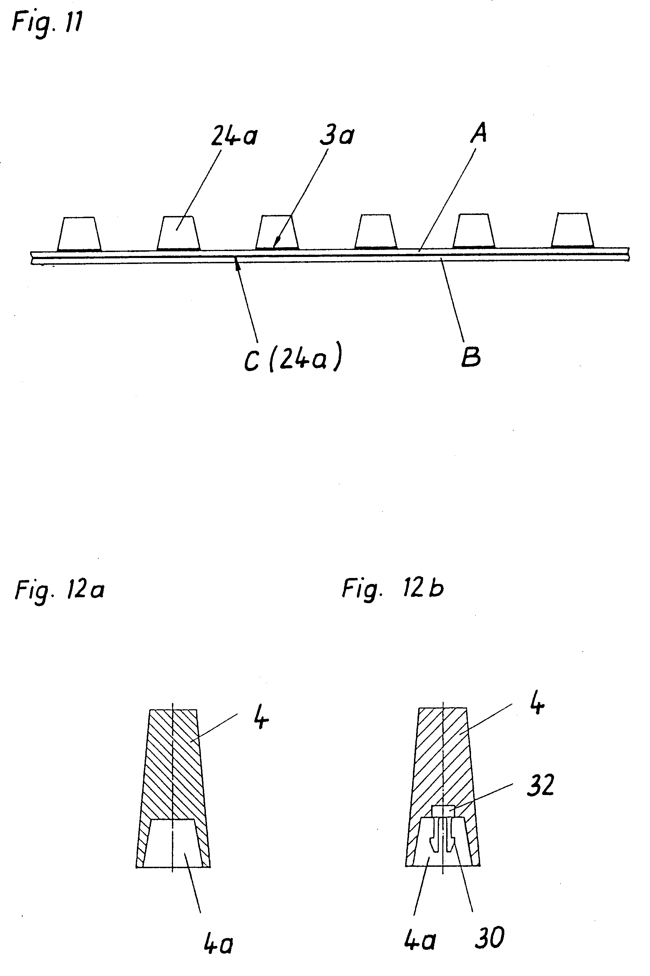

Weitere Ausgestaltungen der Erfindung sind den Patentansprüchen und der Beschreibung der Zeichnungen zu entnehmen; es zeigt
Fig 1 einen einteiligen, mit einer Anzahl Rippen 3 versehenen Gleitkufenring 1 (26), der ein definierter Abschnitt 6 eines zu einer Rolle 7 aufgewickelten elastischen, flexiblen, dehn- und rückstellbaren, band- oder bandagenartigen, gummielastischen Grundkörper r ist, dessen gestreckte, ungespannte Lange um ein vorherbestimmbares Maß kürzer ist als der Außenumfang des mit dem Gleitkufenring zu bestückenden Medienrohres 9. Die beiden Enden des Abschnitts 6 sind mit je einem Verschlußstück 11 versehen, wobei jedes Verschlußstück 11 unter Anwendung von Wärme und / oder Druck, gegebenenfalls unter Mitverwendung eines Haftvermittlers, mit dem Grundkörper 1 unlösbar verbunden ist. Die einander kongruenten Verschlußstücke 11 weisen eine Leiste 16 mit an sie angeformten Ösen 14 auf, die mit Augen 15 versehen sind, die unter Bildung eines einzigen Verschlusses von einem Stab 17 durchdrungen werden; dabei können die Augen 15 der Ösen 14 durch eine Hülse 18 verstärkt sein. Die Rückseite der Leiste 16 kann mit einer Auflage 24 kaschiert sein, die mittels eines Vulkanisations- und / oder Schweißvorgangs unlösbar mit der Leiste 16 verbunden ist. Das Aufkaschieren geschieht nach der Erfindung vorzugsweise unter Anwendung von Wärme und / oder Druck, gegebenenfalls unter Mitverwendung eines Haftvermittlers, eines Vulkanisationsbeschleunigers, eines Aktivators od. dgl..
   Die Rippen 3 bestehen bei diesem gummielastischen Grundkörper 1 bzw. Gleitkufenband 26 aus dem Material des Grundkörpers, sind an diesen angeformt oder in diesen eingeformt und bilden mit dem Grundkörper 1 ein einheitliches Ganzes. Auf diese Rippen 3 werden Gleitkufenschuhe 4 mit bedarfsgemäßer Steghöhe H aufgesteckt, wie dies aus Fig. 3 ersichtlich ist.

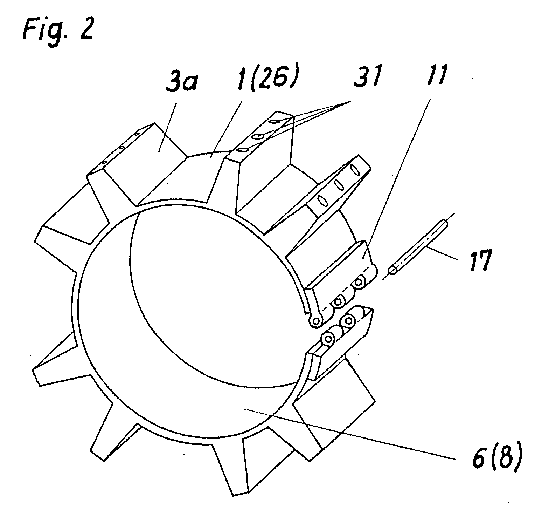

Fig. 2 den Abschnitt 6 eines gummielastischen Grundkörperbandes 8, der einen einteiligen Grundkörper 1 bildet, der mit den beiden Verschlußstücken 11 und dem ihnen zugehörigen Stab 17 einen einteiligen, einen einzigen Verschluß aufweisenden Gleitkufenring bildet. Auf diesem Grundkörper 1 sind unter Verzicht auf die Rippen Tragleisten 3 a aufgebracht und unlösbar mit dein Grundkörper unter Anwendung von Wärme und / oder Druck, gegebenenfalls unter Mitverwendung eines Haftvermittlers, eines Vulkanisationsbeschleunigers, eines Aktivators od. dgl., verbunden. Die Tragleisten 3 a sind dabei so gestaltet, daß sie entweder Gleitkufen mit geringstmöglicher Steghöhe H darstellen oder auf sie Gleitkufenschuhe 4 mit bedarfsgemäßer Steghöhe H aufsteckbar sind (Fig. 3).
   Das aus dem einteiligen Grundkörper 1 bzw. dem definierten Abschnitt 6 gebildete Gleitkufenband 26 wird auf der Baustelle um das Medienrohr herumgelegt und dadurch zu einem einteiligen, einen einzigen Verschluß aufweisenden Gleitkufenring geschlossen und auf dem Medienrohr unter Zugspannung festgesetzt, daß ein Stab 17 durch die Augen 15 der Ösen 14 hindurchgeführt wird; der Stab 17 bildet gemeinsam mit den Augen 15 der Ösen 14 einen gelenkigen Verschluß. Der Stab 17 besteht aus einem hochfesten Material, vorzugsweise einen nichtleitenden Werkstoff; so kann er beispielsweise aus einem Kunststoff vorzugsweise aus einem glasfaserverstärkten, gegebenenfalls UV-stabilisierten Kunststoff, bestehen, ebenso aus einer biegesteifen Kohlefaser od. dgl. gefertigt sein.
   Bei den einteiligen Gleitkufenringen der Fig. 1 und 2 ist die gestreckte ungespannte Länge L₁ des Grundkörpers 1 bzw. des definierten Abschnitts 6 des Grundkörperbandes 8 um ein vorherbestimmbares Maß X kürzer als der Umfang des mit den Gleitkufenringen zu bestückenden Medienrohres 9, wobei das Maß X vorherbestimmbar ist unter Abhängigkeit von der Ausgangsdicke D und dem Längenausdehnungskoeffizienten des Grundkörperbandes 8. Dabei wird das Maß X vorzugsweise so gewählt, daß der einteilige Gleitkufenring auf zwei, drei oder mehrere Medienrohre unterschiedlicher Durchmesser unter Zugspannung aufbringbar ist, wobei die Zugspannung vorzugsweise so groß daß die einmal gewählte Position des Gleitkufenringes auf dem Medienrohr 9 bei dessen Einschieben in das Schutzrohr, die Rohr-Durchführung od. dgl. nicht oder nicht wesentlich verändert wird.
Fig. 3 das mit Rippen 3 bzw. Tragleisten 3 a versehene endlose Grundkörperband 8, das zu Zwecken der Lagerhaktung zu einer Rolle 7 aufgewickelt ist. Werden nun Gleitkufenringe für ein Medienrohr 9 mit einem definierten Außendurchmesser benötigt, das in ein Schutzrohr mit bekanntem Innendurchmesser eingeschoben werden soll, so wird folgendermaßen verfahren:
   a) Das Medienrohr soll mit einteiligen Gleitkufenringen versehen werden. Von der eingelagerten Rolle 7 werden so viele Abschnitte 6 abgerollt und abgeschnitten, wie Gleitkufenringe benötigt werden. Zu diesem Zweck wird der Außenumfang des Medienrohres 9 ermittelt und diese Größe um das vorbeschriebene Maß X geküzt; man erhält die Länge L₁. Es werden also so viele Abschnitte 6 mit der Länge L₁ von der Rolle 7 abgewickelt und abgeschnitten, wie einteilige Gleitkufenringe benötigt werden.
   b) Das Medienrohr soll mit Gleitkufenringen versehen werden, die aus zwei, drei oder mehreren Segmenten bestehen. Der Außenumfang des Medienrohres wird ermittelt und durch die Anzahl der Segmente pro Gleitkufenring geteilt und um das Maß Y reduziert; man erhält das Maß L₂. Es werden nun also so viele Abschnitte 10 mit der Länge L₂ von der Rolle 7 abgewickelt und abgeschnitten, wie Grundkörpersegmente 2 a benötigt werden zur Herstellung der benötigten Anzahl zwei-, drei- oder mehrteiliger Gleitkufenringe.
      Die so erhaltenen Abschnitte 6, 10 werden jezt mit jeweils zwei einander kongruenten Verschlußstücken 11, 12 oder 13 gemäß den Fig. 4 a), 4 b) und c) bzw. anders gestalteten Verschlußstücken konfektioniert.
      Werden für das Verschieben des Medienrohres im Schutzrohr Gleitkufenringe benötigt, deren Gleitkufen eine Steghöhe aufweisen, die dem Maß D + H₁ entsprechen, wird eine Rolle 7 ausgewählt, deren Grundkörperband 8 mit Tragleisten 3 a versehen ist, die vorzugsweise aus einem Kunststoff mit möglichst geringem Reibungskoeffizienten bestehen. Werden jedoch Gleitkufenringe mit höherer Steghöhe benötigt, kann sowohl das zuvor beschriebene Grundkörperband 8 mit den darauf festgesetzten Tragleisten 3 a verwendet werden, ebenso aber auch ein Grundkörperband 8, dessen Rippen 3 an den Grundkörper 1, 2 angeformt oder in diesen eingeformt sind, gegebenenfalls unter Einschluß aussteifender Profilstäbe 5. Auf die Rippen 3 bzw. Tragleisten 3 a der durch die Verschlußstücke 11, 12 oder 13 konfektionierten, einteiligen Gleitkufenringe bzw der Grundkörpersegmente 2 a werden nun Gleitkufenschuhe 4 mit bedarfsgemäßer Steghöhe H aufgesteckt und insbesondere unverlierbar mit den Rippen 3 bzw. Tragleisten 3 a verbunden. Dies kann u.a. auf folgende Weise geschehen:
   c) Die Gleitkufenschuhe 4 werden aus einem Kunststoff gefertigt, der ein möglichst großes Rückstellvermögen aufweist. Solche Gleitkufenschuhe 4 sind vorzugsweise mit einer Ausnehmung 4 a versehen, deren Form und Größe den Rippen 3 bzw. Tragleisten 3 a kongruent, jedoch um ein vorherbestimmbares Maß kleiner ist. Die Ausnehmung 4 a der Gleitkufenschuhe 4 wird nun mechanisch und /oder thermisch derart geweitet, daß die Gleitkufenschuhe 4 mit ihrer Ausnehmung 4 a leicht auf die Rippen 3 bzw. die Tragleisten 3 a aufgesteckt werden können; die Ausnehmungen 4 a gehen auf ihre ursprünglichen Abmessungen zurück und schrumpfen damit unverlierbar auf die Rippen 3 bzw. die Tragleisten 4 a auf (Fig. 12 a).
   d) Die Rippen 3 bzw. die Tragleisten 3 a werden mit Öffnungen 31 versehen, in die Spreizanker 30 sich verkrallend einrasten, die in den Ausnehmungen 4 a der Gleitkufenschuhe 4 angeordnet sind (Fig. 12 b). Die Spreizanker 30 können entweder gleichzeitig mit den Gleithufenschuhen 4 gefertigt werden und mit diesen ein einheitliches Ganzes bilden, oder sie werden in einer eigenen Vorrichtung hergestellt und in Öffnungen 32 eingesetzt, die in den Ausnehmungen 4 a der Gleitkufenschuhe 4 vorgesehen sind (Fig. 12 c). In letzterem Fall werden die Spreizanker 30 unverlierbar dadurch in den Öffnungen 32 der Ausnehmungen 4 a festgesetzt, daß entweder der unter 3. c) beschriebene Memorie-Effekt ausgenutzt wird, oder der Spreizanker 30 wird in seinem oberen Teil mit einer Auflage 24 a versehen und mit dieser unter Anwendung von Wärme und / oder Druck, gegebenenfalls unter Mitverwendung eines Haftvermittlers, insbesondere unlösbar verbunden, mit seinem durch die Auflage 24 a gekennzeichneten Teil in die Öffnung 32 der Ausnehmung 4 a eingesetzt und hier unter eventuell erneuter Wärmezufuhr und / oder Druck, gegebenenfalls unter Mitverwendung eines Haftvermittlers, festgesetzt.
   e) Die Oberfläche der Rippen 3 bzw. diejenige der Tragleisten 3 a wird mit einer Auflage 24 a versehen und mit dieser vorzugsweise unter Anwendung von Wärme und / oder Druck, insbesondere unlösbar, verbunden, gegebenenfalls unter Mitverwendung eines Haftvermittlers, eines Vulkanisationsbeschleunigers, eines Aktivators od. dgl.. Auf die so vorbereiteten Rippen 3 bzw. Tragleisten 3 a werden die Gleitkufenschuhe 4 über ihre Ausnehmungen 4 a aufgesteckt und mit diesen über die Auflage 24 a unter eventuell erneuter Wärmezufuhr und / oder Druck unlösbar verbunden.

   Die vorbeschriebenen Methoden können erfindungsgemäß auch kombiniert angeawndt werden.
Fig. 4 drei mögliche Verschluß- oder Verbindungsstücke 11, 12 und 13; wobei auch anders gestaltete Verbindungs- und Verschlußstücke denkbar sind. Das Verbindungs- bzw. Verschlußstück 11, Fig 4 a) ist bereits unter Fig. 1 engehend beschrieben worden. Das Verbindungs- bzw. Verschlußstück 12 weist eine Verschraubleiste 19 mit zwei, drei oder mehreren Öffnungen 20 auf, die von Schrauben 21 durchdringbar sind. Die Verschraubleisten 19 sind so geformt, daß sie in montiertem Zustand außerhalb der Auflagefläche des Medienrohres liegen. Bei einem einteiligen Gleitkufenring bilden die Verschraubleisten 19 mit den ihre Öffnungen 20 durchdringenden Schrauben 21 mit zugehörigen Muttern 21 a den einzigen Verschluß, über den der einteilige Gleitkufenring unter Zugspannung auf dem Medienrohr festgesetzt wird.
   Bei einein aus zwei drei oder mehrenen Grundkörpersegmenten 2 a zusammengesetzten Gleitkufenring bilden die Verschraubleisten 19 von jeweils zwei einander benachbarten Grundkörpersegmenten 2 a jeweils ein Verbindungsstück, wodurch ein Segmentband 26 a gebildet wird, das lose um das Medienrohr herumgelegt und unter Ausbildung der beiden letzten, noch nicht miteinander durch zugehörige Schrauben 21 und Muttern 21 a verbundenen Verschraubleisten 19 zu einem Verschlußstück zu einem Gleitkufenring geschlossen wird, der durch gleichmäßiges Anziehen aller Schrauben 21 unter Zugspannung auf dem Medienrohr festsetzbar ist (Fig. 4 b).
   An Stelle der Verschraubleisten 19 können auch Verkeilleisten 22 des Verbindungs- bzw. Verschlußstücks 13 Verwendung finden, wobei jeweils zwei aufeinander zuzutreibende Keile die Verbindung oder den Verschluß herstellen (Fig. 4 c).

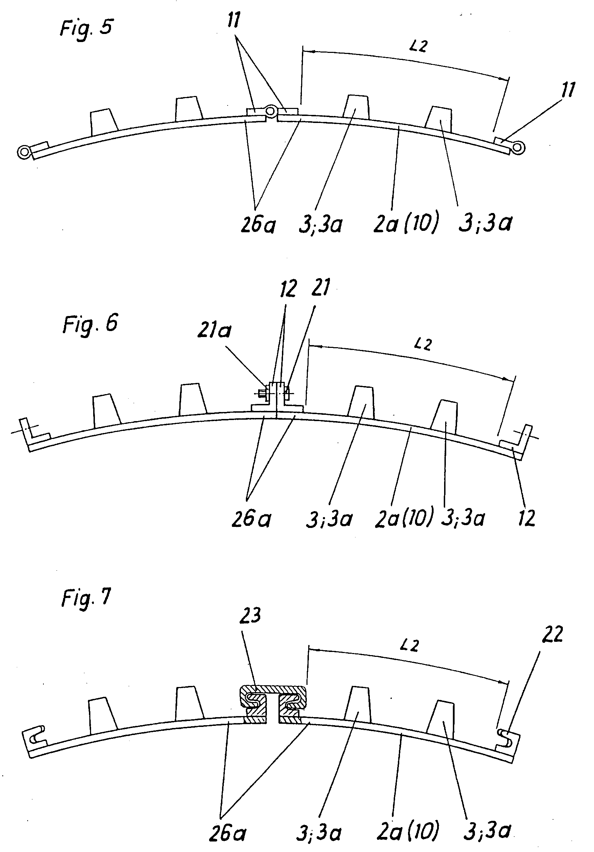

Fig. 5, 6 und 7 die zuvor beschriebenen Verschlußstücke 11, 12 und 13 als Verbindungsstücke bei aus zwei, drei oder mehreren, gummielastischen Grundkörpersegmenten 2 a zusammengesetzten Segmentbändern 26 a.

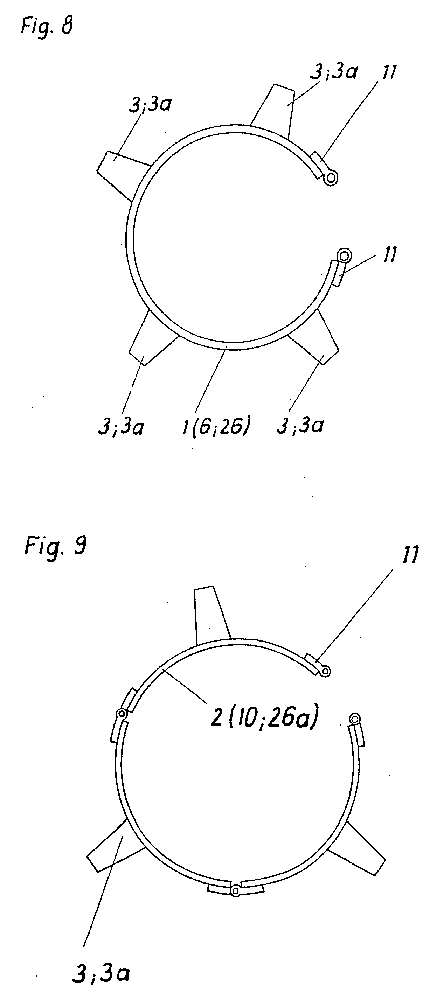

Fig. 8 ein Segmentband 26 a, das aus drei Grundkörpersegmenten 2a mit zugeordneten Verschluß- bzw. Verbindungsstücken 11 besteht, wobei jedes gummielastische Grundkörpersegment 2 a nur eine Rippe 3 bzw. nur eine Tragleiste 3 a aufweist; auf diese können bedarfsgemäß wie vor beschrieben Gleitkufenschuhe 4 unverlierbar aufgesteckt werden. Das gelenkige, gummielastische Segmentband wird auf der Baustelle um das Medienrohr 9 an der dafür vorgesehenen Stelle herumgelegt und dadurch zu einem dreiteiligen Gleitkufenring geschlossen, daß unter Ausnutzung der Dehnfähigheit der gummielastischen Grundkörpersegmente 2 a die beiden noch nicht miteinander verbundenen Verschlußstücke 11 zusammengeführt und mittels eines nicht dargestellten Stabes (in den Fig. 1 und 2 gezeigt) der Verschluß hergestellt wird, wodurch der nun geschlossene Gleitkufenring unter Zugspannung auf dem Medienrohr 9 festsitzt.
Fig. 9 die gleiche Situation bei einem einteiligen Grundkörper 1, der durch einander kongruente Verschlußstücke an seinen beide Enden zu einem Grundkörperband 26 ausgestaltet ist. Auch hier wird das einteilige Grundkörperband 26 an der Baustelle um das Medienrohr 9 an der dafür vorgesehenen Stelle herumgelegt und durch Herstellen der Verbindung der beiden Verschlußstücke 11 mittels eines nicht dargestellten Stabes 17 (Fig. 1, 2) der nun geschlossene, einteilige Gleitkufenring unter Zugspannung auf dem Medienrohr 9 festgesetzt.

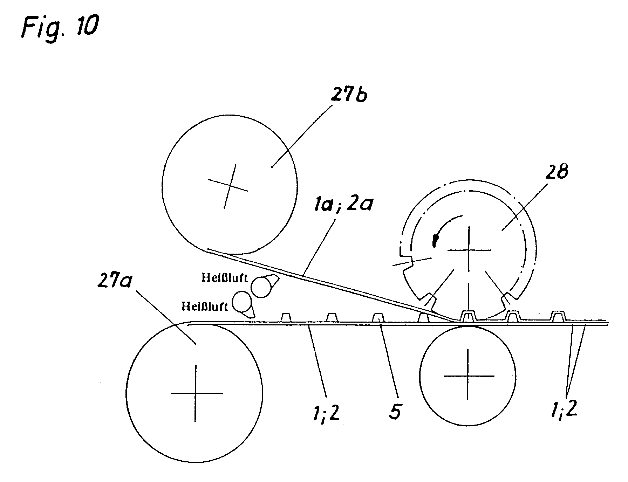

Fig. 10 ein mögliches Verfahren mit zugehöriger Vorrichtung zur Herstellung eines endlosen, Gummielastischen Grundkörperbandes 8 a mit ausgesteiften, angeformten Rippen 3. Von einer Vorratsrolle 27 a wird ein gummielastischer, endloser Grundkörper 1 abgerollt und einem Kalander 28 zugeführt, wobei die Oberseite des Grundkörpers 1 erwämt und auf die so vorbereitete Oberfläche Profilstäbe 5 in definiertem Abstand voneinander festgesetzt werden. Von einer zweiten Vorratsrolle 27 b wird ein weiterer gummielastischer Grundkörper 2 abgerollt, auf seiner Unterseite erwärmt und mit dem die Profilstäbe 5 tragenden Grundkörper 1 derart im Kalander 28 zusammengeführt, daß unter eventuell erneuter Wärmezufuhr und / oder Druck, gegebenenfalls unter Mitverwendung eines Haftvermittlers, eines Vulkanisationsbeschleunigers, eines Aktivators od. dgl., die beiden Grundkörper 1, 2 unter einseitiger Ausbildung von durch die Profilstäbe 5 ausgesteiften Rippen 3, vorzugsweise unlösbar, miteinander zu einem zweischichtigen, gummielastischen, mit Rippen 3 definierter Größe und Anordnung versehenen Grundkörperband 8 a verbunden werden, das zu Zwecken der Lagerhaltung zu einer Rolle 7 aufgewickelt wird. Dabei wird der Kalander 28 von einer Kalibrierwalze 28 a und wenigstens einer Andruckwalze 28 b gebildet und die Kalibrierwalze 28 a ist auf ihrem Umfang mit den auszuformenden Rippen 3 entsprechenden Ausnehmungen 34 versehen. Wenigstens einer Walze 28 a, 28 b ist eine nicht dargestellte Anstellvorrichtung zur Einstellung der Spaltweite zwischen den beiden Walzen zugeordnet, durch die auch der eventuell benötigte Druck eingestellt werden kann.
Fig 11 einen Abschnitt eines aus den Schichten A, B und C bestehenden Grundkörperbandes 8 b, wobei auf die Oberseite der Schicht A Tragleisten 3 a definierter Größe und Form in definierten Abstand voneinander festgesetzt sind. Das Festsetzen der Trageisten 3 a kann dabei folgendermaßen erfolgen:
   f) Die Unterseite der Tragleisten 3 a wird unter Anwendung von Wärme und Druck, gegebenenfalls unter Mitverwendung eines Haftvermittlers, eines Vulkanisationsbeschleunigers, eines Aktivators od. dgl., mit einer vorzugsweise dünnen Auflage 24 a kaschiert, eingelagert und bedarfsgemäß auf dem endlosen, gummielastischen Grundkörperband festgesetzt, notfalls unter erneuter Wärmezufuhr und / oder Druck, gegebenenfalls unter Mitverwendung eines Haftvermittlers, eines Vulkanisationsbeschleunigers, eines Aktivators od. dgl..
   g) Auf die Oberseite der Schicht A wird eine vergleichsweise dünne Auflage 24 a unter Anwendung von Wärme und / oder Druck, gegebenenfalls unter Mitverwendung eines Haftvermittlers, eines Vulkanisationsbeschleunigers, eines Aktivators od. dgl., vollflächig, partiell, in der Art eines Fischgrätenmusters, eines Rautenmusters od. dgl, aufkaschiert und auf dieser Auflage 24 a werden die Tragleisten 3 a in definiertem Abstand voneinander aufgesetzt und unter Druck sowie eventuell erneuter Wärmezufuhr gegebenenfalls unter Mitverwendung eines Haftvermittlers, eines Vulkanisationsbeschleunigers, eines Aktivators od. dgl., insbesondere unlösbar mit der Schicht A verbunden.

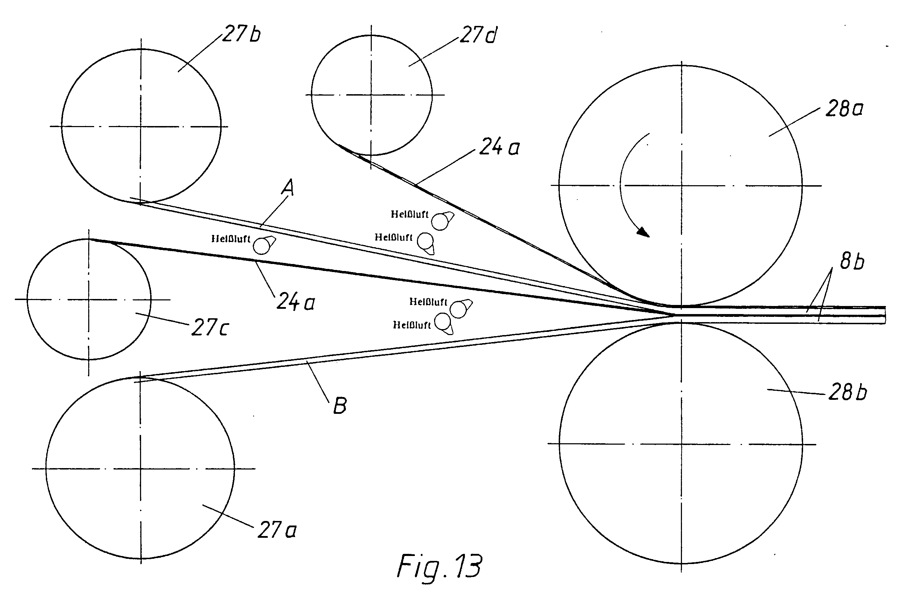

In Beiden Fällen kann die Schicht C ersetzt sein durch die relativ dünne Auflage 24 a. Wie Fig 13 zeigt, kann eine Vorrichtung zur Verwirklichung dieses erfindungsgemäßen mehrschichtigen Grundkörperbandes 8 b ebenfalls aus einem Kalander 28 mit den beiden Druckwalzen 28 a und 28 b bestehen, dem die Schichten A und B von den Vorratsrollen 27 a und 27 b zugeführt werden. Die Schichten A, B werden auf ihrer Unter- bzw. Oberseite durch gegeignete Wärmequellen, z. B. Heißluft, erwärmt. Von der Vorratsrolle 27 c wird eine band- oder bandagenartige Auflage 24 a abgezogen, gegebenenfalls auf ihrer Ober- und / oder Unterseite durch geeignete Wärmequellen, z. B. Heißluft, erwärmt und ebenfalls dem Kalander 28 zugeführt derart, daß die Auflage 24 a zwischen den Schichten A und B angeordnet und mit diesen unter Druck, gegebenenfalls unter erneuter Wärmezufuhr, notfalls unter Mitverwendung eines Haftvermittlers, eines Vulkanisationsbeschleunigers, eines Aktivators od. dgl., vorzugsweise unlösbar, zu einem zwei- bzw. mehrschichtigen Grundkörperband 8 b verbunden wird.

Zur Verwirklichung des Erfindungsgedankens nach Fig. 11 g) kann eine relative dünne weitere Auflage 24 a (gestrichelte Darstellung) von der Vorratsrolle 27 d abgerollt und unter Erwärmung ihrer Unterseite derart dem Kalander 28 zugeführt werden, daß sie im Kalander unter Druck auf die Schicht A aufkaschiert wird, gegebenenfalls unter Mitverwendung eines Haftvermittlers, eines Vulkanisationsbeschleunigers, eines Aktivators od. dgl., notfalls unter erneuter Wärmezufuhr.

Weitere Ausgestaltungen der Erfindung sind den Patenansprüchen zu entnehmen.

## Patentansprüche

1. Gleitkufenring für Rohr-in-Rohr-Systeme, Rohr-Durchführungen od. dgl., der auf seinem Rücken mit parallel und im Abstand zueinander axial verlaufenden Gleitkufen aus Kunststoff mit möglichst geringem Reibungskoeffizienten versehen und über Verschlußstücke auf dem Medienrohr dieses im Schutzrohr führend / zentrierend einen geschlossenen Ring bildend festsetzbar ist, **dadurch gekennzeichnet**, daß der Gleitkufenring aus einem elastischen, flexiblen, dehn- und rückstellbaren, band- oder bandagenartigen, gummielastischen Grundkörper (1, 2) besteht.

2. Gleitkufenring nach Anspruch 1, **dadurch gekennzeichnet**, daß die Oberseite des Grundkörpers (1, 2) eine Anzahl quer zu seiner Langserstreckung verlaufende Rippen (3) aufweist, die parallel zueinander und mit Abstand voneinander angeordnet sind, wobei der Abstand der Rippen (3) voneinander ebenso definiert ist wie die Breite, Höhe, Lange und Querschnittsform der Rippen (3).

3. Gleitkufenring nach den Ansprüchen 1 und 2, **dadurch gekennzeichnet**, daß der Grundkörper (1, 2) aus einem Elastomer nach DIN 7724 besteht.

4. Gleitkufenring nach den Ansprüchen 1 bis 3, **dadurch gekennzeichnet**, daß dem Elastomer ein Vulkanisationsverzögerer oder ein Vulkanisationsbeschleuniger bzw. ein Aktivator beigemischt ist und der aus dem Elastomer gebildete Grundkörper (1, 2) einen hohen Reibungskoeffizienten aufweist.

5. Gleitkufenring nach den Ansprüchen 1 bis 4, **dadurch gekennzeichnet**, daß der Grundkörper (1, 2) einschichtig, zwei- oder mehrschichtig ausgebildet ist, daß bei einem zwei- oder mehrschichtig ausgebildeten Grundkörper die Schichten (A, B, C) aus gleichem, gleichartigem, einander ähnlichem oder unterschiedlichem Material bestehen und untereinander, insbesondere unter gesteuerter Anwendung von Wärme und / oder Druck, gegebenenfalls unter Mitverwendung eines, zweier oder mehrerer Haftvermittler verbindbar sind.

6. Gleitkufenring nach den Ansprüchen 1 bis 5, **dadurch gekennzeichnet**, daß die Rippen (3) aus dem Material des einschichtigen Grundkörpers (1, 2) bzw. bei mehrschichtigem Grundkörper aus demjenigen der oberen Schicht bestehen und derart an den Grundkörper angeformt oder in diesen eingeformt sind, daß sie mit dem Grundkörper ein einheitliches Ganzes bilden, wobei die Rippen (3) durch in sie eingebettete Profilstäbe (5) od. dgl. ausgesteift sein können.

7. Gleitkufenring nach Anspruch 6, **dadurch gekennzeichnet**, daß die Profilstäbe (5) aus einem nichtleitenden Material, beispielsweise aus einem Kunststoff, einem gummielastischen Material großer Shore-Härte od. dgl., bestehen.

8. Gleitkufenring nach den Ansprüchen 1 bis 5, **dadurch gekennzeichnet**, daß die Rippen (3) ersetzt sind durch Tragleisten (3 a), die mit der Oberseite des Grundkörpers (1, 2) durch einen Vulkanisations- und / oder Schweißvorgang unter Anwendung von Wärme und / oder Druck, gegebenenfalls unter Mitverwendung eines Haftvermittlers, verbindbar sind.

9. Gleitkufenring nach Anspruch 8, **dadurch gekennzeichnet**, daß die Tragleisten (3 a) aus einem nichtleitenden Material, beispielsweise einem Kunststoff, der gegebenenfalls glasfaserverstärkt und / oder UV-stabilisiert ist und einen geringen reibungskoeffizienten aufweist, bestehen.

10. Gleitkufenring nach den Ansprüchen 1 bis 9, **dadurch gekennzeichnet**, daß die Rippen (3) bzw. Tragleisten (3 a) sowohl in Längserstreckung des Grundkörpers (1, 2) als auch quer dazu einen trapezförmigen Querschnitt aufweisen und in ihrem oberen Teil gegebenenfalls in einen geraden, rechteckigen Teil (3 b) übergehen.

11. Gleitkufenring nach den Ansprüchen 1 bis 10, **dadurch gekennzeichnet**, daß auf die Rippen (3) bzw. Tragleisten(3 a) Gleitkufenschuhe (4) mit bedarfsgemäßer Steghöhe (H) aufsteckbar und mit diesen mittels eines Vulkanisations- und / oder Schweißvorgangs bzw. mechanisch und / oder durch einen Schrumpfvorgang unverlierbar verbindbar sind, wobei die Gleitkufe (4) in ihrem unteren Teil einen Hohlraum (4 a) aufweist, der in Form und Größe den Rippen (3) bzw. Tragleisten (3 a) kongruent ist, und daß die Gleitkufenschuhe aus einem nichtleitenden Material, z.B. aus einem Kunststoff mit geringem Reibungskoeffizienten und hoher Tragfähigkeit, bestehen.

12. Gleitkufenring nach Anspruch 11, **dadurch gekennzeichnet**, daß der Hohlraum (4 a) des Gleitkufenschuhes (4) mit einem, zwei 0der mehreren Spreizankern (30) versehbar ist, die sich verkrallend in Öffnungen (31) der Kippen (3) bzw. Tragleisten (3 a) einpreßbar sind.

13. Gleitkufenring nach Anspruch 11, **dadurch gekennzeichnet**, daß der Hohlraum (4 a) der Gleitkufenschuhe (4) um ein wählbares Maß kleiner ist als die Raumform der Rippen (3) bzw. Tragleisten (3 a) und dieses Maß unter dem Gesichtspunkt des sogenannten Memory-Effekts des für die Herstellung der Gleitkufenschuhe verwendeten Werkstoffs auwählbar ist.

14. Gleitkufenring nach den Ansprüchen 11 bis 13, **dadurch gekennzeichnet**, daß die Gleitkufenschuhe (4) aus einem Polyethylen hoher Dichte od. dgl. bestehen, das gegebenenfalls weitgehend chemisch vernetzt oder im Bereich der Gleitfläche des Gleitkufenschuhes oberflächenvernetzt ist, wobei die Gleitkufenschuhe in ihrem oberen Teil vorzugsweise aus Vollmaterial bestehen.

15. Gleitkufenring nach den Ansprüchen 1 bis 14, **dadurch gekennzeichnet**, daß der ihn bildende Grundkörper (1) einteilig ausgebildet und ein definierter Abschnitt (6) eines zu einer Rolle aufgewickelten, mit Rippen (3) oder Tragleisten (3 a) versehenen Grundkörperbandes ist, daß die gestreckte, ungespannte Länge des Abschnitts (6) um ein vorbestimmbares Maß (X) kürzer ist als der Außenumfang des mit dem Gleitkufenring zu bestückenden Medienrohres, wobei das Maß (X) vorbestimmbar ist unter Abhängigkeit von der Ausgangsdicke (D) und des Längenausdehnungskoeffizienten des Grundkörperbandes (8), und daß die gestreckte, ungespannte Länge (L₁) des Abschnitts (6) derart festlegbar ist, daß der Gleitkufenring auf zwei, drei oder mehrere Medienrohre unterschiedlicher Außendurchmesser unter Zugspannung aufbringbar ist, wobei die Zugspannung unter Berücksichtigung des Medienrohr-Materials so groß ist, daß die einmal gewählte Position des Gleitkufenringes auf dem Medienrohr (9) bei dessen Einschieben in das Schutzrohr, die Rohr-Durchführung od. dgl. nicht oder nicht wesentlich veränderbar ist

16. Gleitkufenring nach den Ansprüchen 1 bis 14, **dadurch gekennzeichnet**, daß der ihn bildende Grundkörper (2) zwei- oder mehrteilig ausgebildet und aus zwei oder mehreren Grundkörpersegmenten (2 a) zusammengesetzt ist, daß jedes Grundkörpersegment (2 a) ein definierter Abschnitt (10) eines zu einer Rolle aufgewickelten mit Rippen (3) oder Tragleisten (3 a) versehenen Grundkörperbandes ist, daß die gestreckte, ungespannte Länge des Abschnitts (10) um ein vorbestimmbares Maß (Y) kürzer ist als der dem Abschnitt (10) entsprechende Außenumfangsteil des mit dem zwei- oder mehrteiligen Gleitkufenring zu bestückenden Medienrohres, wobei das Maß (Y) vorbestimmbar ist unter Abhängigkeit von der Ausgangsdicke (D) und des Längenausdehnungskoeffizienten des Gründkörperbandes (8), und daß die gestreckte, ungespannte Länge (L₂) des Abschnitts (10) derart festlegbar ist, daß der aus zwei oder mehreren Grundkörpersegmenten (2 a) zusammengesetzte Gleitkufenring auf zwei drei oder mehrere Medienrohre unterschiedlicher Außendurchmesser unter Zugspannung aufbringbar ist, wobei die Zugspannung unter Berücksichtigung des Medienrohr-Materials so groß ist, daß die einmal gewählte Position des Gleitkufenringes auf dem Medienrohr (9) bei dessen Einschieben in das Schutzrohr, die Rohr-Durchführung od. dgl. nicht oder nicht wesentlich veränderbar ist.

17. Gleitkufenring nach den Ansprüchen 15 und 16, **dadurch gekennzeichnet**, daß den beiden Enden der definierten Abschnitte (6, 10) Verschlußstücke (11, 12, 13) zuordbar und mit diesen mittels eines Schweiß- und / oder Vulkanisiervorgangs unter gesteuerter Anwendung von Wärme und / oder Druck verbindbar sind

18. Gleitkufenring nach Anspruch 17, **dadurch gekennzeichnet**, daß die den definierten Abschnitten (6, 10) zuordbaren Verschlußstücke (11) mit Augen (15) versehene Ösen (14) aufweisende Leisten (16) sind, die so gestaltet sind, daß die Ösen einander benachbarter Leisten verzahnend ineinandergreifen und in montiertem Zustand außerhalb der Auflagefläche des Medienrohres (9) liegend von einem Stab (17), der aus einem hochfesten, nichtleitenden Werkstoff besteht, den Grundkörper (1) zu einem einteiligen Gleitkufenring schließend bzw. die einen zwei- oder mehrteiligen Gleitkufenring bildenden Grundkörpersegmente (2 a) verbindend, durchdringbar sind, wobei in die Ösen (14) gegebenenfalls die Augen (15) bildende, die Ösen aussteifende Hülsen (18) eingebettet sind, die aus einem nichtleitenden Material bestehen, während die Ösen (14) und die Leisten (16) aus den Material des Grundkörpers geformt sind.

19. Gleitkufenring nach den Ansprüchen 17 und 18, **dadurch gekennzeichnet**, daß die Ösen (14) und Leisten (16) aus einem Kunststoff, z.B. aus einem Polyethylen, einem Polyamid od. dgl. bestehen und gegebenenfalls glasfaserverstärkt sind.

20. Gleitkufenring nach Anspruch 17, **dadurch gekennzeichnet**, daß die Verschlußstücke (12) mit Öffnungen (20) versehene Verschraubleisten (19) sind, die so geformt sind, daß sie in montiertem Zustand außerhalb der Auflagefläche des Medienrohres (9) liegen und die Öffnungen der Verschraubleisten von Schrauben (21), den einteiligen Grundkörper (1) zu einem Gleitkufenring schließend bzw. die einen zwei- oder mehrteiligen Gleitkufenring bildenden Grundkörpersegmente (2 a) verbindend, durchdringbar sind

21. Gleitkufenring nach Anspruch 17, **dadurch gekennzeichnet**, daß die Verschlußstücke (13) durch Keile (23) hintergreifbare Verkeilleisten sind, die so geformt sind, daß sie in montiertem Zustand außerhalb der Auflagefläche des Medienrohres (9) liegend mittel bei aufeinander zuzutreibender Keile, den einteiligen Grundkörper (1) zu einem Gleitkufenringschließend bzw. die einen zwei- oder mehrteiligen Gleitkufenring bildenden Grundkörpersegmente (2 a) verbindend, verkeilbar sind.

22. Gleitkufenring nach den Ansprüchen 17 bis 21, **dadurch gekennzeichnet**, daß der Rückseite der Verschlußstücke (11, 12, 13) jeweils eine Auflage (24 a) zuordbar und mit diesen unter gesteuerter Anwendung von Wärme und / oder Druck mittels eines Vulkanisations- und / oder Schweißvorgangs verbindbar ist, und daß die mit der Auflage (24 a) versehenen Verschlußstücke notfalls unter erneuter Anwendung von Wärme und/ oder Druck, gegebenenfalls unter Mitverwendung eines Haftvermittlers, mit den Enden der definierten Abschnitte (6, 10) verbindbar sind.

23. Gleitkufenring nach den Ansprüchen 1 bis 22, **dadurch gekennzeichnet**, daß der Grundkörper (1, 2) aus einem Thermoplast besteht, wie z.B. einem PVC, EVA od. dgl., der eine ausreichende Gummielastizität und einen hohen Reibungskoeffizienten aufweist, wobei dem Thermoplst notfalls elastomere Copolymere beigemischt sind.

24. Gleitkufenring nach den Ansprüchen 1 bis 22, **dadurch gekennzeichnet,** daß dem Elastomer des Grundkörpers (1, 2) gegebenenfalls Carborane beigemischt sind.

25. Gleitkufenring nach den Ansprüchen 1 bis 22, **dadurch gekennzeichnet**, daß der Grundkörper (1, 2) aus einem Elastomer besteht, das unter Zusatz von Füllstoffen, Säureakzeptoren, Vulkanisationsbeschleunigern und Vulkanisatoren, gegebenenfalls unter Mitverwendung von Aktivatoren, plastifizier- und mischbar, anschließend formbar, vulkanisierbar und notfalls temperbar ist.

26. Gleitkufenring nach den Ansprüchen 1 bis 25, **dadurch gekennzeichnet**, daß die Rippen (3) bzw. Tragleisten (3 a) mit einer, zwei oder mehreren Öffnungen (31) versehen sind, ind die Spreizanker (30) sich verkrallend einpreßbar sind, die ihrerseits im Hohlraum (4 a) der Gleitkufenschuhe (4) angeordnet sind, wobei die Spreizanker entweder mit den Gleitkufenschuhen jeweils ein einheitliches Ganzes bilden oder in einer eigenen Vorrichtung herstellbar und nachträglich in Öffnungen (32), die im Hohlraum (4 a) eines jeden Gleutkufenschuhes angeordnet sind, einsetzbar sind.

27. Gleitkufenring nach Anspruch 26, **dadurch gekennzeichnet**, daß die Spreizanker (30) entweder unter gesteuerter Anwendung von Wärme und / oder Druck, gegebenenfalls unter Aufbringung einer Auflage (24 a), notfalls unter Mitverwendung eines Haftvermittlers, oder dadurch in die Öffnungen (32) der Gleitkufenschuhe (4) einsetzbar sind, daß die Öffnungen mechanisch und / oder unter Wärmeanwendung aufgeweitet, die Spreizanker in die aufgeweiteten Öffnungen eingesetzt und in diesen unter Rückbildung der Aufweitung festgesetzt werden.

28. Gleitkufenring nach den Ansprüchen 1 bis 27, **dadurch gekennzeichnet**, daß der Grundkörper (1, 2) aus einem Elastomer besteht, dem gegebenenfalls ein Vulkanisationsverzögerer beigemischt ist, daß der band- oder bandagenartige, endlose Grundkörper einseitig mit einer Auflage (24 a) versehbar ist, die derart reaktionsfähig einstellbar ist, daß in ihr durch gesteuerte Anwendung von Wärme und / oder Druck ein Vulkanisations- und / oder Schweißprozeß auslösbar ist, durch den sie sowohl mit dem Grundkörper als auch mit den auf sie aufgesetzten Tragleisten (3 a) unlösbar zu einer aufrollbaren Einheit verbindbar ist, wobei der Grundkörper vollflächig, partiell oder streifenförmig, nach Art eines Fischgrätmusters, Rautenmusters od. dgl. mit der Auflage kaschierbar ist.

29. Verfahren zur Herstellung eines Gleitkufenringes nach einem oder mehreren der Ansprüche 1 bis 28, **dadurch gekennzeichnet**, daß ein einteiliger, einen einzigen Verschluß aufweisender Gleitkufenring dadurch herstellbar ist, daß in einen endlosen, elastischen, flexiblen, dehn- und rückstellbaren, band- oder bandagenartigen, gummielastischen Grundkörper (1) definierter Breite, der ein-, zwei- oder mehrschichtig ausbildbar ist, quer zu seiner Längserstreckung einseitig Rippen (3) bzw. Tragleisten (3 a) definierter Größe und Form in definiertem, parallelen Abstand zueinander, gegebenenfalls unter Aussteifung durch Einbindung entsprechend gestalteter Profilstäbe od. dgl., eingeformt, an diese angeformt oder mit diesen verbunden werden, daß der mit Rippen bzw. Tragleisten versehene Grundkörper zu Zwecken der Lagerhaltung zu einer Rolle (7) aufgerollt und von dieser bedarfsgemäß Teillängen bzw. Abschnitte (6) abgerollt und abgeschnitten werden, deren gestreckte, ungespannte Länge (L₁) um ein vorherbestimmbares Maß (X) kürzer ist als der Außenumfang des mit Gleitkufenringen zu bestückenden Medienrohres (9), wobei das Maß (X) vorbestimmbar ist unter Abhängigkeit von der Ausgangsdicke (D) und dem Längenausdehnungskoeffizienten des Grundkörperbandes (8), daß die Abschnitte (6) anschließend dadurch zu einteiligen, offenen Gleitkufenbändern (26) konfektioniert werden, daß die beiden Enden der Abschnitte mit einander konruenten Verschlußstücken (11, 12, 13) versehen und mit diesen unter gesteuerter Anwendung von Wärme und / oder Druck miitels eines Vulkanisations- und / oder Schweißvorgangs unlösbar verbunden werden, daß auf die Rippen (3) bzw. Tragleisten (3 a) Gleitkufenschuhe (4) mit bedarfsgemäßer Steghöhe (H) aufgesteckt und mit diesen mittels eines Vulkanisations- oder Schweißvorgangs oder mechanisch mittels Spreizanker (30) verbunden werden, und daß die so hergestellten, einteiligen, offenen Gleitkufenbänder (26) an vorherbestimmten Stellen um das Medienrohr (9) herumgelegt und dadurch zu einteiligen, einen einzigen Verschluß aufweisende Gleitkufenringe ausgebildet werden, daß unter Aufbringung einer Zugspannung die Verschlußleisten (11, 12, 13) jeweils mittels eines Stabes (17) oder mittels zweier Schrauben (21) mit zugehörigen Muttern (21 a) oder mittels zweier Keile (23) in die einzigen Verschlüsse umgewndelt werden.

30. Verfahren zur Herstellung eines Gleitkufenringes nach einem oder mehreren der Ansprüche 1 bis 28, **dadurch gekennzeichnet**, daß ein zwei- oder mehrteiliger, zwei oder mehrere Verschlüsse aufweisender Gleitkufenring dadurch herstellbar ist, daß in einen endlosen, elastischen, flexiblen, dehn- und rückstellbaren, band- oder bandagenartigen, gummielastischen Grundkörper (2) definierter Breite, der ein, zwei- oder mehrschichtig ausbildbar ist, quer zu seiner Längserstreckung einseitig Rippen (3) bzw. Tragleisten (3 a) definierter Größe und Form in definiertem, parallelem Abstand zueinander, gegebenefalls unter Aussteifung durch Einbindung entsprechend gestalteter Profilstäbe od. dgl., eingeformt, an diese angeformt oder mit diesen verbunden werden, daß der mit Rippen bzw. Tragleisten versehene Grundkörper zu Zwecken der Lagerhaltung zu einer Rolle (7) aufgerollt und von dieser bedarfsgemäß Teillängen bzw. Abschnitte (10) abgerollt und abgeschnitten werden, deren gestreckte, ingespannte Lange (L₂) um ein vorherbestimmbares Maß (Y) kürzer ist als der Außenumfang des mit Gleitkufenringen zu bestückenden Medienrohres (9), wobei das Maß (Y) vorbestimmbar ist unter Abhängigkeit von der Ausgangsdicke (D) und dem Längenausdehnungskoeffizienten des Grundkörperbandes (8), daß die Abschnitte (10) anschließend dadurch zu zwei- oder mehrteiligen, offenen Gleitkufen-Segmentbändern (26 a) konfektioniert werden, daß die beiden Enden eines jeden Abschnitts mit einander konruenten Versclußstücken (11, 12, 13) versehen und mit diesen unter gesteuerter Anwendung von Wärme und / oder Druck miitels eines Vulkanisations- und / oder Schweißvorgangs unlösbar verbunden werden, daß auf die Rippen (3) bzw. Tragleisten (3 a) Gleitkufenschuhe (4) mit bedarfsgemäßer Steghöhe (H) aufgesteckt und mit diesen mittels eines Vulkanisations- oder Schweißvorgangs oder mechanisch mittels Spreizanker (30) verbunden werden, und daß die so konfektionierten Grundkörpersegmente (2 a) durch das Verbinden einander benachbarter Verschlußstücke, (11, 12, 13) zu zwei- oder mehrteiligen, offenen Gleitkufen-Segmentbändern (26 a) ausgebildet und an vorherbestimmten Stellen um das Medienrohr (9) herumgelegt und dadurch zu zwei oder mehrteiligen, zwei oder mehrere Verschlüsse aufweisende Gleitkufenringe ausgebildet werden, daß unter Aufbringung einer Zugspannung die noch nicht miteinander verbundenen Verschlußleisten (11, 12, 13) jeweils mittels eines Stabes (17) oder mittels zweier Schrauben (21) mit zugehörigen Muttern (21 a) oder mittels zweier Keile (23) in den letzten Verschluß umgewndelt werden.

31. Verfahren zur Herstellung eines Gleitkufenringes nach den Ansprüchen 29 und 30, **dadurch gekennzeichnet**, daß man einen endlosen, elastischen, flexiblen, dehn- und rückstellbaren, band- oder bandagenartigen, gummielastischen Grundkörper (1, 2) definierter Breite erwärmt und auf seiner Rückseite quer zu seiner Längserstreckung verlaufende Rippen (3) ausbildet, daß man entweder Material des Grundkörpers an den für die Rippenerstellung vorgesehenen Stellen des Grundkörpers anhäuft und unter Anwendung von Druck und gegebenenfalls erneuter Wärmezufuhr, notfalls unter Mitverwendung eines Vulkanisationsbeschleunigers, eines Aktivators od. dgl., verdichtet und der gewünschten Rippenform und -größe ausformt, oder den Grundkörper (1, 2) quer zu seiner Längserstreckung in definierten Abständen in Falten (25) legt, in diese Falten gegebenenfalls Profilstäbe (5) aus nichtleitendem Material einbringt und die Falten unter erneuter Wärmezufuhr und Druck, gegebenenfalls unter Mitverwendung eines Haftvermittlers, eines Vulkanisationsbeschleunigers, eines Aktivators od. dgl., verschließt und den Profilstab einvulkanisiert, daß man den so mit Rippen (3) versehenen Grundkörper zu einer Rolle aufwickelt und einlagert, und daß man von dieser Rolle bedarfsgemäß Abschnitte (6, 10) abrollt und abschneidet, diese durch Zuordnung von Verschlußstücken (11, 12, 13) und aufsteckbaren Gleitkufenschuhen (4) konfektioniert zu einteiligen, offenen Gleitkufenbändern oder zu zwei- oder mehrteiligen, offenen Gleitkufen-Segmentbändern, diese an vorbestimmten Stellen um das Medienrohr (9) herumlegt und durch Verbinden der noch offenen Verschlußstücke (11, 12, 13) die einteiligen, jeweils einen einzigen Verschluß aufweisenden Gleitkufenringe oder die zwei- bzw. mehrteiligen, zwei oder mehrere Verschlüsse aufweisenden Gleitkufenringe ausbildet und unter Zugspannung auf dem Medienrohr festsetzt.

32. Verfahren zur Herstellung eines Gleitkufenringes nach den Ansprüchen 29 und 30, **dadurch gekennzeichnet**, daß man einen endlosen, elastischen, flexiblen, dehn- und rückstellbaren, band- oder bandagenartigen, gummielastischen Grundkörper (1, 2) definierter Breite von einer Vorratsrolle (27 a) abrollt und einer Verarbeitungseinrichtung, z.B. einem Kalander (28) od. dgl., zuführt, daß man den Grundkörper auf seinem Weg zum Kalander auf seiner Oberseite erwärmt und mit einem Haftvermittler, einem Vulkanisationsbeschleuniger, einem Aktivator od. dgl. versieht und auf die so vorbereitete Oberfläche Profilstäbe (5) in definiertem, parallelem Abstand voneinander quer zur Längserstreckung des Grundkörpers (1, 2) festsetzt, daß man zwischenzeitlich einen weiteren endlosen, elastischen, flexiblen, dehn- und rückstellbaren, gummielastischen Grundkörper (1 a, 2 a) definierter Breite von einer weiteren Vorratsrolle (27 b) abrollt und ebenfalls der Verarbeitungsvorrichtung (28) zuführt, wobei man den zweiten Grundkörper (1 a, 2 a) auf seiner Unterseite ebenfalls erwärmt auf gegebenenfalls mit einem Haftvermittler, einem Vulkanisationsbeschleuniger, einem Aktivator od. dgl. beaufschlagt, daß man die so vorbereiteten Grundkörper (1, 1 a, 2, 2 a) im Kalander zusammenführt und beide Grundkörper unter Einschluß der auf den Grundkörper (1, 2) festgesetzten Profilstäbe (5) unter Anwendung von Druck und gegebenenfalla erneuter Wärmezufuhr durch einen Vulkanisations- und / oder Schweißvorgang miteinander verbindet derart, daß man einen mit ausgesteiften Rippen (3) versehenen endlosen, elastischen, flexiblen, dehn- und rückstellbaren, band- oder bandagenartigen, gummielastischen, zweischichtigen Grundkörper (1, 2) erhält, den man zu Zwecken der Lagerhaltung zu einer Rolle aufwickelt, und daß man von dieser Rolle bedarfsgemäß Abschnitte (6, 10) abrollt und abschneidet, diese durch Zuordnung von Verschlußstücken (11, 12, 13) und aufsteckbaren Gleitkufenschuhen (4) konfektioniert zu einteiligen, offenen Gleitkufenbändern oder zu zwei- oder mehrteiligen, offenen Gleitkufen-Segmentbändern diese an vorbestimmten Stellen um das Medienrohr (9) herumlegt und durch Verbinden der noch offenen Verschlußstücke (11, 12, 13) die einteiligen, jeweils einen einzigen Verschluß aufweisenden Gleitkufenringe oder die zwei- bzw. mehrteiligen, zwei oder mehrere Verschlüsse aufweisenden Gleitkufenringe ausbildet und unter Zugspannung auf dem Medienrohr festsetzt.

33. Verfahren nach den Ansprüchen 29 und 32, **dadurch gekennzeichnet**, daß man sowohl die ausgesteiften als auch die nicht ausgesteiften Rippen (3) so ausformt, daß sie nach Abschluß des Vulkanisations- und / oder Schweißvorgangs sowohl mit dem einschichtigen als auch mit dem zwei- oder mehrschichtigen Grundkörper (1, 2) ein einheitliches Ganzes bildet, und daß man die Wärmezufuhr und / oder den Druck bei einem einschichtigen Grundkörper im Bereich der auszubildenden Rippen auf der den Rippen abgewandten Seite des Grundkörpers derart variabel steuert, daß sich partiell ein höherer Plastifizierungsgrad des Grundkörperwerkstoffs einstellt und im Bereich der ursprünglichen Ausbildung der Falten (25) quasi eine Materialverschmelzung erfolgt derart, daß man auch im Bereich der ursprünglichen Falten ein homogenes, einheitliches Ganzes erreicht und die den Rippen abgewandte Seite des Grundkörpers eine geschlossene Fläche bildet.

34. Verfahren nach den Ansprüchen 29 bis 33, **dadurch gekennzeichnet**, daß man die Rippen (3) entweder über die gesamte definierte Breite des Grundkörpers (1, 2) ausbildet oder ihre Länge sowie diejenige der Profilstäbe (5) derart begrenzt, daß man an beiden Längsrändern des Grundkörpers definierte Führungsränder (29) erhält, über die man die Grundkörper der Verarbeitungseinrichtung (28) gesteuert zuführt und von dieser gesteuert fortführt.

35. Verfahren nach den Ansprüchen 29 bis 34, **dadurch gekennzeichnet**, daß man bei einem einschichtigen Grundkörper (1, 2) die Rippen (3) durch Tragleisten (3 a) ersetzt, daß man die Tragleisten (3 a) aus einein vorzugsweise nichtleitendem Material in parallelem, definiertem Abstand voneinander auf die Oberseite des in Grundkörpers (1, 2) aufsetzt und mit diesem unter gesteuerter Anwendung von Wärme und / oder Druck mittels eines Vulkanisations- und / oder Schweißvorgang verbindet, gegebenenfalls unter Mitverwendung eines Haftvermittlers, eines Vulkanisationsbeschleunigers, eines Aktivators od. dgl..

36. Verfahren nach den Ansprüchen 29 bis 35, **dadurch gekennzeichnet**, daß man die Rippen (3) bzw. Tragleisten (3 a) sowohl in Länserstreckung des Grundkörpers (1, 2) als auch quer dazu trapezartig ausbildet, den trapezförmigen Querschnitt notfalls in seinen oberen Bereich in einen geraden, rechteckigen Teil (3 b) übergehen läßt, und daß man den Hohlraum (4 a) der Gleitkufenschuhe (4) in Form und Größe den Rippen (3) bzw. Tragleisten (3 a) entsprechend ausformt, die Gleitkufenschuhe mit ihren Hohlräumen auf die Rippen bzw. Tragleisten aufsteckt und mit diesen unverlierbar verbindet, beispielsweise unter gesteuerter Anwendung von Wärme und / oder Druck unter Mitverwendung einer Auflage (24 a) als Haftvermittler, eines Vulkanisationsbeschleuniders, eines Aktivators od. dgl., oder den Gleitkufenschuh aus einem PEHD ausformt mit einem Hohlraum (4 a), der um ein vorbestimmbares Maß kleiner ist als die Rippen (3) bzw. Tragleisten (3 a), daß man dann den Hohlraum (4 a) der Gleitkufenschuhe derart erwärmt, daß er mit Spiel auf die Rippen bzw. Tragleisten aufsetzbar und der Gleitkufenschuh (4) unter Rückführung der wärmebedingten Aufweitung des Hohlraums auf der Rippe bzw. der Tragleiste festsetzbar ist, oder daß man den Gleitkufenschuh mit den Rippen bzw. Tragleisten mechanisch verbindet dadurch, daß man in den Rippen bzw. Tragleisten Offnungen (31) vorsieht, in die man Spreizanker (30) sich unlösbar verkrallend festsetzt, die ihrerseits im Hohlraum (4 a) der Gleitkufenschuhe angeordnet oder eingebracht bzw. mit diesem verbunden sind.

37. Verfahren nach den Ansprüchen 29 bis 36, **dadurch gekennzeichne**t, daß man eine Rohgummimischung, bestehend aus Kautschuk, Füllstoffen, Beschleunigern und Vulkanisatoren, gegebenenfalls unter Mitverwendung von Aktivatoren, zu einem endlosen, einseitig in Anzahl, Form, Größe und Anordnung definierte Rippen aufweisenden, elastischen, flexiblen, dehn- und rückstellbaren, band- oder bandagenartigen Grundkörper (1, 2) ausformt, vulkanisiert und notfalls tempert, und daß man den so gebildeten Grundkörper zu Zwecken der Lagerhaltung zu einer Rolle aufwickelt.

38. Verfahren nach den Ansprüchen 29 bis 36, **dadurch gekennzeichnet**, daß man den Grundkörper aus einem Elastomer, wie z.B. EPDM, SBR, NR, CR, NBR od. dgl. herstellt und ihm gegebenenfalls Carborane oder andere, die Temperaturbeständigkeit steigernde Produkte beimischt.

39. Verfahren nach den Ansprüchen 29 bis 38, **dadurch gekennzeichnet**, daß man den Grundkörper (1, 2) aus einem Elastomer fertigt und diesem gegebenenfalls einen Vulkanisationsverzögerer beimischt, daß man den band- oder bandagenartigen Grundkörper einseitig mit einer Auflage (24 a) kaschiert, die derart reaktionsfähig gehalten ist, daß man in ihr durch gesteuerte Anwendung von Wärme und / oder Druck einen Vulkanisations- und / oder Schweißvorgang auslöst, und daß man die Auflage auf diese Weise sowohl mit dem Grundkörper (1, 2) als auch mit den auf sie aufgesetzten Tragleisten (3 a) unlösbar zu einer aufrollbaren Einheit verbindet, wobei man den Grundkörper mit der Auflage vollflächig, partiell oder streifenförmig, nach Art eines Fischgrät- oder Rautenmusters od. dgl. kaschiert.

40. Verfahren nach den Ansprüchen 29 bis 39, **dadurch gekennzeichnet**, daß man einen endlosen, elastischen, flexiblen, dehn- und rückstellbaren, band- oder bandagenartigen, gummielastischen Grundkörper (1) definierter Breite von einer Vorratsrolle (27 a) abrollt und einem Kalander (28) od. dgl. zuführt, daß man von einer anderen Vorratsrolle (27 c) eine Auflage (24 a) abrollt und ebenfalls dem Kalander zuführt, daß man die Oberseite des Grundkörpers und / oder die Rückseite der Auflage erwärmt und / oder mit einem Haftvermittler, einem Vulkanisationsbeschleuniger, einem Aktivator od. dgl. versieht, daß man die Auflage zwischen den Walzen (28 a, 28 b) unter gesteuerter Anwendung von Druck auf die Oberfläche des Grundkörpers unlösbar aufkaschiert, und daß man auf die Auflage (24 a) Tragleisten (3 a) in gewollter Anordnung aufsetzt und in einer Preßvorrichtung (33) od. dgl., gegebenenfalls unter erneuter erneuter Wärmezufuhr, unter Anwendung von Dick unlösbar mit der Auflage verbindet und den so mit Tragleisten (3 a) versehenen Grundkörper (1) als endloses Grundkörperband (8) zu Zwecken der Lagerhaltung zu einer Rolle (7) aufwickelt.

41. Verfahren nach den Ansprüchen 29 bis 39, **dadurch gekennzeichnet**, daß man einen endlosen, elastischen, flexiblen, dehn- und rückstellbaren, band- oder bandagenartigen, gummielastischen Grundkörper (1) definierter Breite von einer Vorratsrolle (27 a) abrollt und einem Kalander (28) od. dgl. zuführt, daß man von einer anderen Vorratsrolle (27 c) eine Auflage (24 a) abrollt und ebenfalls dem Kalander zuführt, daß man die Oberseite des Grundkörpers und / oder die Rückseite der Auflage erwärmt und / oder mit einem Haftvermittler, einem Vulkanisationsbeschleuniger, einem Aktivator od. dgl. versieht, daß man die Auflage zwischen den Walzen (28 a, 28 b) unter gesteuerter Anwendung von Druck auf die Oberfläche des Grundkörpers unlösbar aufkaschiert, und daß man auf die Auflage (24 a) Profilstäbe (5) in gewollter Anordnung aufsetzt, daß man von einer anderen Vorratsrolle (27 b) einen weiteren gummielastischen Grundkörper (2) abrollt, auf seiner Rückseite erwärmt und / oder mit einem Haftvermittler, einem Vulkanisationsbeschleuniger, einem Aktivator od. dgl. versieht und gemeinsammit dem mit der Auflage (24 a) und den Profilstäben (5) versehenen Grundkörper (1) in eine Preßvorrichtung (33) od. dgl. einführt, und daß man beide Grundkörper (1, 2) unter Einschluß der Profilstäbe (5) über die Auflage (24 a) miteinander unter Anwendung von Druck und gegebenenfalls erneuter Wärmezufuhr zu einer vorzugsweise unlösbaren Einheit verbindet und den so gebildeten zwei- bzw. dreischichtigen Grundkörper 1 / 2) zu Zwecken der Lagerhaltung zu einer Rolle / 7 a) aufwickelt.
